# EUROPEAN PATENT APPLICATION

(11) **EP 4 598 247 A1**
(43) Date of publication of application: **06.08.2025**
(21) Application number: 23873004.8
(22) Date of filing: 25.09.2023
(51) Int. Cl.: H04W 74/08, H04W 72/25, H04W 24/08, H04W 76/14, H04W 92/18, H04L 5/00, H04L 1/18

(54) **METHOD AND APPARATUS FOR SIDELINK CHANNEL ACCESS IN UNLICENSED BAND**

(30) Priority: 30.09.2022 KR 20220125536; 07.11.2022 KR 20220147235; 17.02.2023 KR 20230021634; 07.04.2023 KR 20230046267; 15.05.2023 KR 20230062462
(71) Applicant: Electronics and Telecommunications Research Institute, Daejeon 34129 (KR)
(72) Inventor: LEE, Jung Hoon, Daejeon 34129 (KR); KIM, Cheul Soon, Daejeon 34129 (KR); MOON, Sung Hyun, Daejeon 34129 (KR)
(74) Representative: Betten & Resch
(86) International application number: PCT/KR2023/014611
(87) International publication number: WO 2024/071887

(57) **Abstract**

Disclosed are a method and apparatus for sidelink channel access in an unlicensed band. The method for a first terminal comprises the steps of: on the basis of a groupcast method, transmitting data to a plurality of terminals; receiving, from one or more terminals from among the plurality of terminals, one or more pieces of HARQ-ACK feedback on the data; adjusting the CW size on the basis of the result of comparison between an ACK ratio to the one or more pieces of HARQ-ACK feedback and a threshold value; and performing SL communication on the basis of a CW having the adjusted CW size.

## Description

### [Technical Field]

The present disclosure relates to a sidelink communication technique, and more particularly, to a technique for accessing a sidelink channel in an unlicensed band.

### [Background Art]

The communication system (e.g., a new radio (NR) communication system) using a higher frequency band (e.g., a frequency band of 6GHz or above) than a frequency band (e.g., a frequency band of 6GHz or below) of the long term evolution (LTE) communication system (or, LTE-A communication system) is being considered for processing of soaring wireless data. The NR system may support not only a frequency band of 6 GHz or below, but also a frequency band of 6 GHz or above, and may support various communication services and scenarios compared to the LTE system. In addition, requirements of the NR system may include enhanced Mobile BroadBand (eMBB), Ultra Reliable Low Latency Communication (URLLC), and Massive Machine Type Communication (mMTC).

Meanwhile, the NR communication system may support sidelink (SL) communication, and SL communication of the NR communication system may be performed in an unlicensed band. In this case, a transmitting terminal may perform SL communication based on a listen before talk (LBT) operation. For example, the transmitting terminal may select a backoff value within a contention window (CW) and perform SL communication if a channel is in an idle state during a time corresponding to the backoff value. In order to efficiently perform SL communication, methods for adjusting the size of CW are required.

### [Disclosure]

### [Technical Problem]

The present disclosure is directed to providing a method and an apparatus for accessing a sidelink channel in an unlicensed band.

### [Technical Solution]

A method of a first terminal, according to exemplary embodiments of the present disclosure for achieving the above-described objective, may comprise: transmitting data to a plurality of terminals based on a groupcast scheme; receiving one or more hybrid automatic repeat request (HARQ)-acknowledgement (ACK) feedbacks for the data from one or more of the plurality of terminals; adjusting a contention window (CW) size based on a result of comparison between a threshold and an ACK ratio for the one or more HARQ-ACK feedbacks; and performing sidelink (SL) communication based on a CW with the adjusted CW size.

When the ACK ratio is equal to or greater than the threshold, the CW size may be reduced, and when the ACK ratio is less the threshold, the CW size may be increased.

When the ACK ratio is equal to or greater than the threshold, the CW size may be adjusted to a minimum CW size.

The method may further comprise: receiving a higher layer message including information on the threshold from the base station.

The threshold may be set in a user equipment (UE)-specific manner or a cell-specific manner.

The threshold may be independently set for each resource pool.

A minimum CW size and a maximum CW size for the CW size may each be independently set according to a channel access priority class (CAPC).

When at least one HARQ-ACK feedback is not received from at least one terminal among the plurality of terminals, the at least one HARQ-ACK feedback for the at least one terminal may be regarded as a negative ACK (NACK).

A method of a first terminal, according to exemplary embodiments of the present disclosure for achieving the above-described objective, may comprise: performing first sidelink (SL) communication using a first contention window (CW) having a first CW size; and when a hybrid automatic repeat request (HARQ)-acknowledgement (ACK) feedback function is disabled, performing second SL communication using the first CW having the first CW size that is a latest size.

The method may further comprise: when the first CW size is used x times, adjusting the first CW size to a second CW size larger than the first CW size; and performing third SL communication using a second CW having the second CW size, wherein x is a natural number.

The method may further comprise: receiving a higher layer message including information on x from the base station.

x may be set in a user equipment (UE)-specific manner or a cell-specific manner.

The method may further comprise: when the first CW size is a maximum CW size and the maximum CW size is used x times, adjusting the first CW size to a minimum CW size; and performing fourth SL communication using a minimum CW having the minimum CW size, wherein x is a natural number.

A minimum CW size and a maximum CW size for the first CW size may each be independently set according to a channel access priority class (CAPC).

A first terminal, according to exemplary embodiments of the present disclosure for achieving the above-described objective, may comprise a least one processor, and the at least one processor may cause the first terminal to perform: transmitting data to a plurality of terminals based on a groupcast scheme; receiving one or more hybrid automatic repeat request (HARQ)-acknowledgement (ACK) feedbacks for the data from one or more of the plurality of terminals; adjusting a contention window (CW) size based on a result of comparison between a threshold and an ACK ratio for the one or more HARQ-ACK feedbacks; and performing sidelink (SL) communication based on a CW with the adjusted CW size.

When the ACK ratio is equal to or greater than the threshold, the CW size may be reduced, and when the ACK ratio is less the threshold, the CW size may be increased.

The at least one processor may further cause the first terminal to perform: receiving a higher layer message including information on the threshold from the base station.

The threshold may be set in a user equipment (UE)-specific manner or a cell-specific manner.

A minimum CW size and a maximum CW size for the CW size may each be independently set according to a channel access priority class (CAPC).

When at least one HARQ-ACK feedback is not received from at least one terminal among the plurality of terminals, the at least one HARQ-ACK feedback for the at least one terminal may be regarded as a negative ACK (NACK).

### [Advantageous Effects]

According to the present disclosure, a transmitting terminal can perform SL communication with receiving terminal(s) in an unlicensed band. The transmitting terminal can transmit data to the receiving terminal(s) and receive HARQ-ACK feedback(s) for the data. The transmitting terminal can adjust a CW size based on an ACK ratio or a negative ACK (NACK) ratio for the HARQ-ACK feedback(s), and can perform SL communication with the receiving terminal (s) based on a CW with the adjusted CW size. The CW size can be appropriately adjusted depending on a communication status between the transmitting terminal and the receiving terminal(s), and thus the SL communication can be performed efficiently and the performance of the communication system can be improved.

### [Description of Drawings]

FIG. 1 is a conceptual diagram illustrating a first exemplary embodiment of a communication system.
FIG. 2 is a block diagram illustrating a first exemplary embodiment of a communication node constituting a communication system.
FIG. 3 is a conceptual diagram illustrating a first exemplary embodiment of a type 1 frame.
FIG. 4 is a conceptual diagram illustrating a first exemplary embodiment of a type 2 frame.
FIG. 5 is a conceptual diagram illustrating a first exemplary embodiment of a transmission method of SS/PBCH block in a communication system.
FIG. 6 is a conceptual diagram illustrating a first exemplary embodiment of an SS/PBCH block in a communication system.
FIG. 7 is a conceptual diagram illustrating a second exemplary embodiment of a method of transmitting SS/PBCH blocks in a communication system.
FIG. 8 is a conceptual diagram illustrating a first exemplary embodiment of SSB burst configuration.
FIG. 9A is a conceptual diagram illustrating an RMSI CORESET mapping pattern #1 in a communication system.
FIG. 9B is a conceptual diagram illustrating an RMSI CORESET mapping pattern #2 in a communication system.
FIG. 9C is a conceptual diagram illustrating an RMSI CORESET mapping pattern #3 in a communication system.
FIG. 10 is a conceptual diagram illustrating a first exemplary embodiment of configuration of a slot in which a PSFCH is configured.
FIG. 11 is a conceptual diagram illustrating a first exemplary embodiment of a PSFCH for ACK/NACK transmission.
FIG. 12 is a conceptual diagram illustrating exemplary embodiments of a method for multiplexing a control channel and a data channel in sidelink communication.
FIG. 13 is a conceptual diagram illustrating a first exemplary embodiment of a resource selection operation.
FIG. 14 is a conceptual diagram illustrating a first exemplary embodiment of a resource reselection operation.
FIG. 15A is a conceptual diagram illustrating a first exemplary embodiment of a COT sharing method in SL communication.
FIG. 15B is a conceptual diagram illustrating a second exemplary embodiment of a COT sharing method in SL communication.
FIG. 16 is a conceptual diagram illustrating a first exemplary embodiment of different offsets for shared terminals.
FIG. 17A is a conceptual diagram illustrating a first exemplary embodiment of SL transmission.
FIG. 17B is a conceptual diagram illustrating a second exemplary embodiment of SL transmission.

### [Mode for Invention]

Exemplary embodiments of the present disclosure are disclosed herein. However, specific structural and functional details disclosed herein are merely representative for purposes of describing embodiments of the present disclosure. Thus, embodiments of the present disclosure may be embodied in many alternate forms and should not be construed as limited to embodiments of the present disclosure set forth herein.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In exemplary embodiments of the present disclosure, "at least one of A and B" may mean "at least one of A or B" or "at least one of combinations of one or more of A and B". Also, in exemplary embodiments of the present disclosure, "one or more of A and B" may mean "one or more of A or B" or "one or more of combinations of one or more of A and B".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted.

A communication system to which exemplary embodiments according to the present disclosure are applied will be described. The communication system may be the 4G communication system (e.g., Long-Term Evolution (LTE) communication system or LTE-A communication system), the 5G communication system (e.g., New Radio (NR) communication system), the sixth generation (6G) communication system, or the like. The 4G communication system may support communications in a frequency band of 6 GHz or below, and the 5G communication system may support communications in a frequency band of 6 GHz or above as well as the frequency band of 6 GHz or below. The communication system to which the exemplary embodiments according to the present disclosure are applied is not limited to the contents described below, and the exemplary embodiments according to the present disclosure may be applied to various communication systems. Here, the communication system may be used in the same sense as a communication network, 'LTE' may refer to '4G communication system', 'LTE communication system', or 'LTE-A communication system', and 'NR' may refer to '5G communication system' or 'NR communication system'.

In exemplary embodiments, "an operation (e.g., transmission operation) is configured" may mean that "configuration information (e.g., information element(s) or parameter(s)) for the operation and/or information indicating to perform the operation is signaled". "Information element(s) (e.g., parameter(s)) are configured" may mean that "corresponding information element(s) are signaled". The signaling may be at least one of system information (SI) signaling (e.g., transmission of system information block (SIB) and/or master information block (MIB)), RRC signaling (e.g., transmission of RRC parameters and/or higher layer parameters), MAC control element (CE) signaling, or PHY signaling (e.g., transmission of downlink control information (DCI), uplink control information (UCI), and/or sidelink control information (SCI)).

Hereinafter, even when a method (e.g., transmission or reception of a signal) performed at a first communication node among communication nodes is described, a corresponding second communication node may perform a method (e.g., reception or transmission of the signal) corresponding to the method performed at the first communication node. That is, when an operation of a terminal is described, a base station corresponding to the terminal may perform an operation corresponding to the operation of the terminal. Conversely, when an operation of a base station is described, a terminal corresponding to the base station may perform an operation corresponding to the operation of the base station. In addition, when an operation of a first terminal is described, a second terminal corresponding to the first terminal may perform an operation corresponding to the operation of the first terminal. Conversely, when an operation of a second terminal is described, a first terminal corresponding to the second terminal may perform an operation corresponding to the operation of the second terminal.

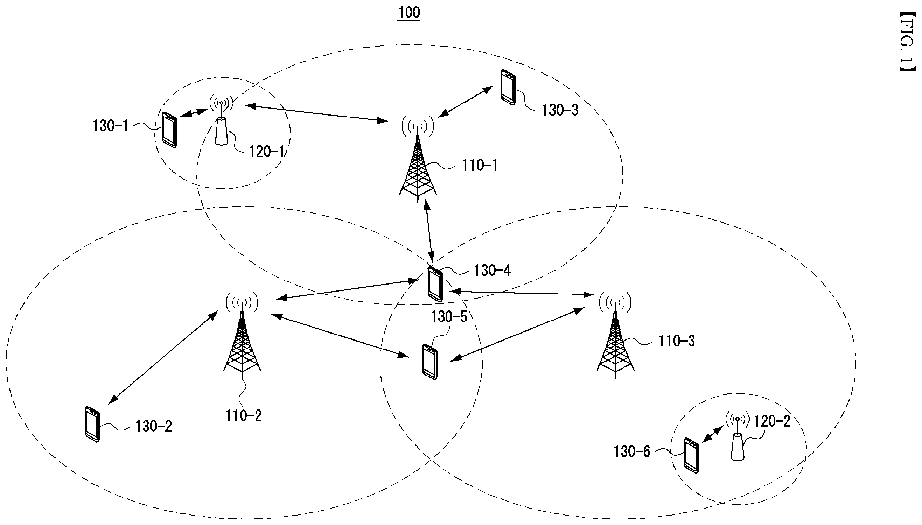

FIG. 1 is a conceptual diagram illustrating a first exemplary embodiment of a communication system.

Referring to FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further comprise a core network (e.g., a serving gateway (S-GW), a packet data network (PDN) gateway (P-GW), and a mobility management entity (MME)). When the communication system 100 is a 5G communication system (e.g., new radio (NR) system), the core network may include an access and mobility management function (AMF), a user plane function (UPF), a session management function (SMF), and the like.

The plurality of communication nodes 110 to 130 may support a communication protocol defined by the 3rd generation partnership project (3GPP) specifications (e.g., LTE communication protocol, LTE-A communication protocol, NR communication protocol, or the like). The plurality of communication nodes 110 to 130 may support code division multiple access (CDMA) technology, wideband CDMA (WCDMA) technology, time division multiple access (TDMA) technology, frequency division multiple access (FDMA) technology, orthogonal frequency division multiplexing (OFDM) technology, filtered OFDM technology, cyclic prefix OFDM (CP-OFDM) technology, discrete Fourier transform-spread-OFDM (DFT-s-OFDM) technology, orthogonal frequency division multiple access (OFDMA) technology, single carrier FDMA (SC-FDMA) technology, non-orthogonal multiple access (NOMA) technology, generalized frequency division multiplexing (GFDM) technology, filter band multi-carrier (FBMC) technology, universal filtered multi-carrier (UFMC) technology, space division multiple access (SDMA) technology, or the like. Each of the plurality of communication nodes may have the following structure.

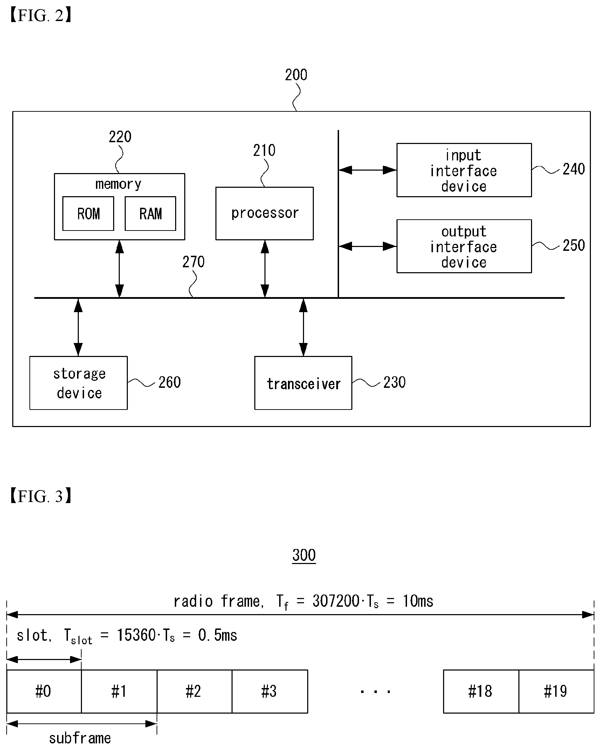

FIG. 2 is a block diagram illustrating a first exemplary embodiment of a communication node constituting a communication system.

Referring to FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

However, each component included in the communication node 200 may not be connected to the common bus 270 but may be connected to the processor 210 via an individual interface or a separate bus. For example, the processor 210 may be connected to at least one of the memory 220, the transceiver 230, the input interface device 240, the output interface device 250 and the storage device 260 via a dedicated interface.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B (NB), a evolved Node-B (eNB), a gNB, an advanced base station (ABS), a high reliability-base station (HR-BS), a base transceiver station (BTS), a radio base station, a radio transceiver, an access point, an access node, a radio access station (RAS), a mobile multihop relay-base station (MMR-BS), a relay station (RS), an advanced relay station (ARS), a high reliability-relay station (HR-RS), a home NodeB (HNB), a home eNodeB (HeNB), a road side unit (RSU), a radio remote head (RRH), a transmission point (TP), a transmission and reception point (TRP), or the like.

Each of the plurality of terminals 130-1, 130-2, 130-3, 130-4, 130-5, and 130-6 may refer to a user equipment (UE), a terminal equipment (TE), an advanced mobile station (AMS), a high reliability-mobile station (HR-MS), a terminal, an access terminal, a mobile terminal, a station, a subscriber station, a mobile station, a portable subscriber station, a node, a device, an on-board unit (OBU), or the like.

Each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support a multi-input multi-output (MIMO) transmission (e.g., a single-user MIMO (SU-MIMO), a multi-user MIMO (MU-MIMO), a massive MIMO, or the like), a coordinated multipoint (CoMP) transmission, a carrier aggregation (CA) transmission, a transmission in unlicensed band, device-to-device (D2D) communication (or, proximity services (ProSe)), Internet of Things (IoT) communications, dual connectivity (DC), or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2 (i.e., the operations supported by the plurality of base stations 110-1, 110-2, 110-3, 120-1, and 120-2). For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control D2D communications between the fourth terminal 130-4 and the fifth terminal 130-5, and thus the fourth terminal 130-4 and the fifth terminal 130-5 may perform the D2D communications under control of the second base station 110-2 and the third base station 110-3.

Meanwhile, the communication system may support three types of frame structures. A type 1 frame structure may be applied to a frequency division duplex (FDD) communication system, a type 2 frame structure may be applied to a time division duplex (TDD) communication system, and a type 3 frame structure may be applied to an unlicensed band based communication system (e.g., a licensed assisted access (LAA) communication system).

FIG. 3 is a conceptual diagram illustrating a first exemplary embodiment of a type 1 frame.

Referring to FIG. 3, a radio frame 300 may comprise 10 subframes, and a subframe may comprise 2 slots. Thus, the radio frame 300 may comprise 20 slots (e.g., slot #0, slot #1, slot #2, slot #3, ..., slot #18, and slot #19). The length T_{f} of the radio frame 300 may be 10 milliseconds (ms). The length of the subframe may be 1 ms, and the length Tₛₗₒₜ of a slot may be 0.5 ms. Here, Tₛ may indicate a sampling time, and may be 1/30,720,000s.

The slot may be composed of a plurality of OFDM symbols in the time domain, and may be composed of a plurality of resource blocks (RBs) in the frequency domain. The RB may be composed of a plurality of subcarriers in the frequency domain. The number of OFDM symbols constituting the slot may vary depending on configuration of a cyclic prefix (CP). The CP may be classified into a normal CP and an extended CP. If the normal CP is used, the slot may be composed of 7 OFDM symbols, in which case the subframe may be composed of 14 OFDM symbols. If the extended CP is used, the slot may be composed of 6 OFDM symbols, in which case the subframe may be composed of 12 OFDM symbols.

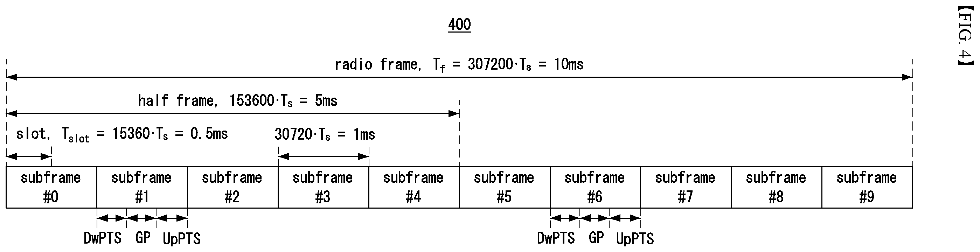

FIG. 4 is a conceptual diagram illustrating a first exemplary embodiment of a type 2 frame.

Referring to FIG. 4, a radio frame 400 may comprise two half frames, and a half frame may comprise 5 subframes. Thus, the radio frame 400 may comprise 10 subframes. The length T_{f} of the radio frame 400 may be 10 ms. The length of the half frame may be 5 ms. The length of the subframe may be 1 ms. Here, Tₛ may be 1/30,720,000s.

The radio frame 400 may include at least one downlink subframe, at least one uplink subframe, and a least one special subframe. Each of the downlink subframe and the uplink subframe may include two slots. The length Tₛₗₒₜ of a slot may be 0.5 ms. Among the subframes included in the radio frame 400, each of the subframe #1 and the subframe #6 may be a special subframe. For example, when a switching periodicity between downlink and uplink is 5 ms, the radio frame 400 may include 2 special subframes. Alternatively, the switching periodicity between downlink and uplink is 10 ms, the radio frame 400 may include one special subframe. The special subframe may include a downlink pilot time slot (DwPTS), a guard period (GP), and an uplink pilot time slot (UpPTS).

The downlink pilot time slot may be regarded as a downlink interval and may be used for cell search, time and frequency synchronization acquisition of the terminal, channel estimation, and the like. The guard period may be used for resolving interference problems of uplink data transmission caused by delay of downlink data reception. Also, the guard period may include a time required for switching from the downlink data reception operation to the uplink data transmission operation. The uplink pilot time slot may be used for uplink channel estimation, time and frequency synchronization acquisition, and the like. Transmission of a physical random access channel (PRACH) or a sounding reference signal (SRS) may be performed in the uplink pilot time slot.

The lengths of the downlink pilot time slot, the guard period, and the uplink pilot time slot included in the special subframe may be variably adjusted as needed. In addition, the number and position of each of the downlink subframe, the uplink subframe, and the special subframe included in the radio frame 400 may be changed as needed.

In the communication system, a transmission time interval (TTI) may be a basic time unit for transmitting coded data through a physical layer. A short TTI may be used to support low latency requirements in the communication system. The length of the short TTI may be less than 1 ms. The conventional TTI having a length of 1 ms may be referred to as a base TTI or a regular TTI. That is, the base TTI may be composed of one subframe. In order to support transmission on a base TTI basis, signals and channels may be configured on a subframe basis. For example, a cell-specific reference signal (CRS), a physical downlink control channel (PDCCH), a physical downlink shared channel (PDSCH), a physical uplink control channel (PUCCH), a physical uplink shared channel (PUSCH), and the like may exist in each subframe.

On the other hand, a synchronization signal (e.g., a primary synchronization signal (PSS) and a secondary synchronization signal (SSS)) may exist for every 5 subframes, and a physical broadcast channel (PBCH) may exist for every 10 subframes. Also, each radio frame may be identified by an SFN, and the SFN may be used for defining transmission of a signal (e.g., a paging signal, a reference signal for channel estimation, a signal for channel state information, etc.) longer than one radio frame. The periodicity of the SFN may be 1024.

In the LTE system, the PBCH may be a physical layer channel used for transmission of system information (e.g., master information block (MIB)). The PBCH may be transmitted every 10 subframes. That is, the transmission periodicity of the PBCH may be 10 ms, and the PBCH may be transmitted once in the radio frame. The same MIB may be transmitted during 4 consecutive radio frames, and after 4 consecutive radio frames, the MIB may be changed according to a situation of the LTE system. The transmission period for which the same MIB is transmitted may be referred to as a 'PBCH TTI', and the PBCH TTI may be 40ms. That is, the MIB may be changed for each PBCH TTI.

The MIB may be composed of 40 bits. Among the 40 bits constituting the MIB, 3 bits may be used to indicate a system band, 3 bits may be used to indicate physical hybrid automatic repeat request (ARQ) indicator channel (PHICH) related information, 8 bits may be used to indicate an SFN, 10 bits may be configured as reserved bits, and 16 bits may be used for a cyclic redundancy check (CRC).

The SFN for identifying the radio frame may be composed of a total of 10 bits (B9 to B0), and the most significant bits (MSBs) 8 bits (B9 to B2) among the 10 bits may be indicated by the PBCH (i.e., MIB). The MSBs 8 bits (B9 to B2) of the SFN indicated by the PBCH (i.e., MIB) may be identical during 4 consecutive radio frames (i.e., PBCH TTI). The least significant bits (LSBs) 2 bits (B1 to B0) of the SFN may be changed during 4 consecutive radio frames (i.e., PBCH TTI), and may not be explicitly indicated by the PBCH (i.e., MIB). The LSBs (2 bits (B1 to B0)) of the SFN may be implicitly indicated by a scrambling sequence of the PBCH (hereinafter referred to as 'PBCH scrambling sequence').

A gold sequence generated by being initialized by a cell ID may be used as the PBCH scrambling sequence, and the PBCH scrambling sequence may be initialized for each four consecutive radio frames (e.g., each PBCH TTI) based on an operation of 'mod (SFN, 4)'. The PBCH transmitted in a radio frame corresponding to an SFN with LSBs 2 bits (B1 to B0) set to '00' may be scrambled by the gold sequence generated by being initialized by the cell ID. Thereafter, the gold sequences generated according to the operation of 'mod (SFN, 4)' may be used to scramble the PBCH transmitted in the radio frames corresponding to SFNs with LSBs 2 bits (B1 to B0) set to '01', '10', and '11'.

Accordingly, the terminal having acquired the cell ID in the initial cell search process may identify the value of the LSBs 2 bits (B1 to B0) of the SFN (e.g., '00', '01', '10', or '11') based on the PBCH scramble sequence obtained in the decoding process for the PBCH (i.e., MIB). The terminal may use the LSBs 2 bits (B1 to B0) of the SFN obtained based on the PBCH scrambling sequence and the MSBs 8 bits (B9 to B2) of the SFN indicated by the PBCH (i.e., MIB) so as to identify the SFN (i.e., the entire bits B9 to B0 of the SFN).

On the other hand, the communication system may support not only a high transmission rate but also technical requirements for various service scenarios. For example, the communication system may support an enhanced mobile broadband (eMBB) service, an ultra-reliable low-latency communication (URLLC) service, a massive machine type communication (mMTC) service, and the like.

The subcarrier spacing of the communication system (e.g., OFDM-based communication system) may be determined based on a carrier frequency offset (CFO) and the like. The CFO may be generated by a Doppler effect, a phase drift, or the like, and may increase in proportion to an operation frequency. Therefore, in order to prevent the performance degradation of the communication system due to the CFO, the subcarrier spacing may increase in proportion to the operation frequency. On the other hand, as the subcarrier spacing increases, a CP overhead may increase. Therefore, the subcarrier spacing may be configured based on a channel characteristic, a radio frequency (RF) characteristic, etc. according to a frequency band.

The communication system may support numerologies defined in Table 1 below.

**[Table 1]**

| **Numerology (*µ*)** | **0** | **1** | **2** | **3** | **4** | **5** |
|---|---|---|---|---|---|---|
| Subcarrier spacing | 15 kHz | 30 kHz | 60 kHz | 120 kHz | 240 kHz | 480 kHz |
| OFDM symbol length [us] | 66.7 | 33.3 | 16.7 | 8.3 | 4.2 | 2.1 |
| CP length [us] | 4.76 | 2.38 | 1.19 | 0.60 | 0.30 | 0.15 |
| Number of OFDM symbols within 1ms | 14 | 28 | 56 | 112 | 224 | 448 |

For example, the subcarrier spacing of the communication system may be configured to 15 kHz, 30 kHz, 60 kHz, or 120 kHz. The subcarrier spacing of the LTE system may be 15 kHz, and the subcarrier spacing of the NR system may be 1, 2, 4, or 8 times the conventional subcarrier spacing of 15 kHz. If the subcarrier spacing increases by exponentiation units of 2 of the conventional subcarrier spacing, the frame structure can be easily designed.

The communication system may support FR1 as well as FR2. The FR2 may be classified into FR2-1 and FR2-2. The FR1 may be a frequency band of 6 GHz or below, the FR2-1 may be a frequency band of 24.25 to 52.6, and the FR2-2 may be a frequency band of 52.6 to 71 GHz. In an exemplary embodiment, the FR2 may be the FR2-1, the FR2-2, or a frequency band including the FR2-1 and FR2-2. In each of the FR1, FR2-1, and FR2-2, subcarrier spacings available for data transmission may be defined as shown in Table 2 below. In each of the FR1, the FR2-1, and the FR2-2, SCSs available for synchronization signal block (SSB) transmission may be defined as shown in Table 3 below. In each of the FR1, the FR2-1, and the FR2-2, SCSs available for RACH transmission (e.g., Msg1 or Msg-A) may be defined as shown in Table 4 below.

**[Table 2]**

| **data** | | |
|---|---|---|
| FR1 | FR2-1 | FR2-2 |
| 15 kHz, 30 kHz, 60 kHz (optional) | 60 kHz, 120 kHz | 120 kHz, 480 kHz, 960 kHz |

**[Table 3]**

| **SSB** | | |
|---|---|---|
| FR1 | FR2-1 | FR2-2 |
| 15 kHz, 30 kHz | 120 kHz, 240 kHz | 120 kHz, 480 kHz, 960 kHz |

**[Table 4]**

| **RACH** | | |
|---|---|---|
| FR1 | FR2-1 | FR2-2 |
| 1.25 kHz, 5 kHz, 15 kHz, 30 kHz | 60 kHz, 120 kHz | 120 kHz, 480 kHz, 960 kHz |

The communication system may support a wide frequency band (e.g., several hundred MHz to tens of GHz). Since the diffraction characteristic and the reflection characteristic of the radio wave are poor in a high frequency band, a propagation loss (e.g., path loss, reflection loss, and the like) in a high frequency band may be larger than a propagation loss in a low frequency band. Therefore, a cell coverage of a communication system supporting a high frequency band may be smaller than a cell coverage of a communication system supporting a low frequency band. In order to solve such the problem, a beamforming scheme based on a plurality of antenna elements may be used to increase the cell coverage in the communication system supporting a high frequency band.

The beamforming scheme may include a digital beamforming scheme, an analog beamforming scheme, a hybrid beamforming scheme, and the like. In the communication system using the digital beamforming scheme, a beamforming gain may be obtained using a plurality of RF paths based on a digital precoder or a codebook. In the communication system using the analog beamforming scheme, a beamforming gain may be obtained using analog RF devices (e.g., phase shifter, power amplifier (PA), variable gain amplifier (VGA), and the like) and an antenna array.

Because of the need for expensive digital to analog converters (DACs) or analog to digital converters (ADCs) for digital beamforming schemes and transceiver units corresponding to the number of antenna elements, the complexity of antenna implementation may be increased to increase the beamforming gain. In case of the communication system using the analog beamforming scheme, since a plurality of antenna elements are connected to one transceiver unit through phase shifters, the complexity of the antenna implementation may not increase greatly even if the beamforming gain is increased. However, the beamforming performance of the communication system using the analog beamforming scheme may be lower than the beamforming performance of the communication system using the digital beamforming scheme. Further, in the communication system using the analog beamforming scheme, since the phase shifter is adjusted in the time domain, frequency resources may not be efficiently used. Therefore, a hybrid beam forming scheme, which is a combination of the digital scheme and the analog scheme, may be used.

When the cell coverage is increased by the use of the beamforming scheme, common control channels and common signals (e.g., reference signal and synchronization signal) for all terminals belonging to the cell coverage as well as control channels and data channels for each terminal may also be transmitted based on the beamforming scheme. In this case, the common control channels and the common signals for all terminals belonging to the cell coverage may be transmitted based on a beam sweeping scheme.

In addition, in the NR system, a synchronization signal/physical broadcast channel (SS/PBCH) block may also be transmitted in a beam sweeping scheme. The SS/PBCH block may be composed of a PSS, an SSS, a PBCH, and the like. In the SS/PBCH block, the PSS, the SSS, and the PBCH may be configured in a time division multiplexing (TDM) manner. The SS/PBCH block may be referred also to as an 'SS block (SSB)'. One SS/PBCH block may be transmitted using N consecutive OFDM symbols. Here, N may be an integer equal to or greater than 4. The base station may periodically transmit the SS/PBCH block, and the terminal may acquire frequency/time synchronization, a cell ID, system information, and the like based on the SS/PBCH block received from the base station. The SS/PBCH block may be transmitted as follows.

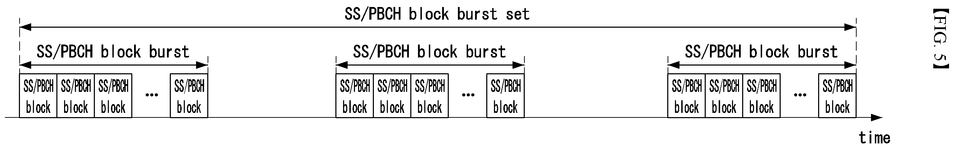

FIG. 5 is a conceptual diagram illustrating a first exemplary embodiment of a transmission method of SS/PBCH block in a communication system.

Referring to FIG. 5, one or more SS/PBCH blocks may be transmitted in a beam sweeping scheme within an SS/PBCH block burst set. Up to L SS/PBCH blocks may be transmitted within one SS/PBCH block burst set. L may be an integer equal to or greater than 2, and may be defined in the 3GPP standard. Depending on a region of a system frequency, L may vary. Within the SS/PBCH block burst set, the SS/PBCH blocks may be located consecutively or distributedly. The consecutive SS/PBCH blocks may be referred to as an 'SS/PBCH block burst'. The SS/PBCH block burst set may be repeated periodically, and system information (e.g., MIB) transmitted through the PBCHs of the SS/PBCH blocks within the SS/PBCH block burst set may be the same. An index of the SS/PBCH block, an index of the SS/PBCH block burst, an index of an OFDM symbol, an index of a slot, and the like may be indicated explicitly or implicitly by the PBCH.

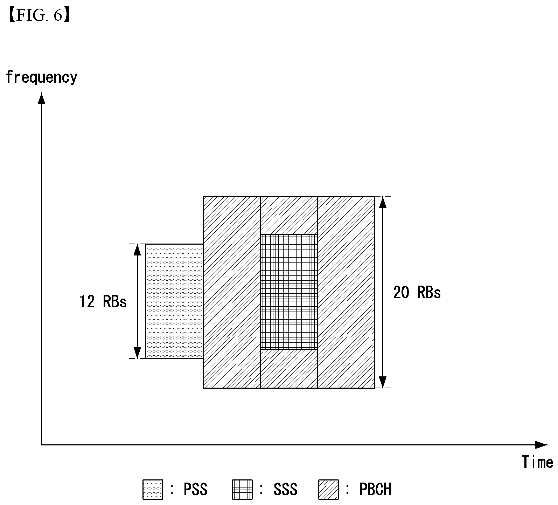

FIG. 6 is a conceptual diagram illustrating a first exemplary embodiment of an SS/PBCH block in a communication system.

Referring to FIG. 6, signals and a channel are arranged within one SS/PBCH block in the order of 'PSS→PBCH→SSS→PBCH'. The PSS, SSS, and PBCH within the SS/PBCH block may be configured in a TDM scheme. In a symbol where the SSS is located, the PBCH may be located in frequency resources above the SSS and frequency resources below the SSS. That is, the PBCH may be transmitted in both end bands adjacent to the frequency band in which the SSS is transmitted. When the maximum number of SS/PBCH blocks is 8 in the sub 6GHz frequency band, an SS/PBCH block index may be identified based on a demodulation reference signal used for demodulating the PBCH (hereinafter, referred to as 'PBCH DMRS'). When the maximum number of SSBs is 64 in the over 6GHz frequency band, LSB 3 bits of 6 bits representing the SS/PBCH block index may be identified based on the PBCH DMRS, and the remaining MSB 3 bits may be identified based on a payload of the PBCH.

The maximum system bandwidth that can be supported in the NR system may be 400 MHz. The size of the maximum bandwidth that can be supported by the terminal may vary depending on the capability of the terminal. Therefore, the terminal may perform an initial access procedure (e.g., initial connection procedure) by using some of the system bandwidth of the NR system supporting a wide band. In order to support access procedures of terminals supporting various sizes of bandwidths, SS/PBCH blocks may be multiplexed in the frequency domain within the system bandwidth of the NR system supporting a wide band. In this case, the SS/PBCH blocks may be transmitted as follows.

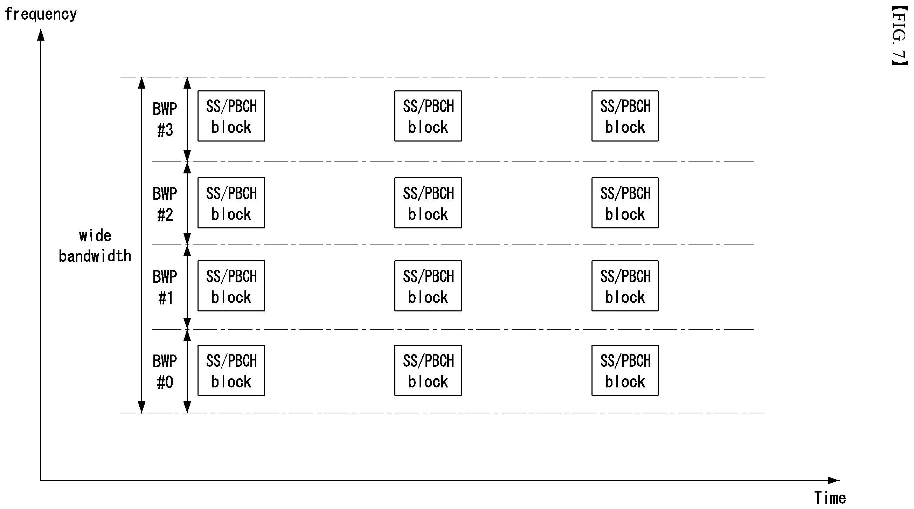

FIG. 7 is a conceptual diagram illustrating a second exemplary embodiment of a method of transmitting SS/PBCH blocks in a communication system.

Referring to FIG. 7, a wideband component carrier (CC) may include a plurality of bandwidth parts (BWPs). For example, the wideband CC may include 4 BWPs. The base station may transmit SS/PBCH blocks in the respective BWPs #0 to #3 belonging to the wideband CC. The terminal may receive the SS/PBCH block(s) from one or more BWPs of the BWPs #0 to #3, and may perform an initial access procedure using the received SS/PBCH block.

After detecting the SS/PBCH block, the terminal may acquire system information (e.g., remaining minimum system information (RMSI)), and may perform a cell access procedure based on the system information. The RMSI may be transmitted on a PDSCH scheduled by a PDCCH. Configuration information of a control resource set (CORESET) in which the PDCCH including scheduling information of the PDSCH through which the RMSI is transmitted may be transmitted on a PBCH within the SS/PBCH block. A plurality of SS/PBCH blocks may be transmitted in the entire system band, and one or more SS/PBCH blocks among the plurality of SS/PBCH blocks may be SS/PBCH block(s) associated with the RMSI. The remaining SS/PBCH blocks may not be associated with the RMSI. The SS/PBCH block associated with the RMSI may be defined as a 'cell defining SS/PBCH block'. The terminal may perform a cell search procedure and an initial access procedure by using the cell-defining SS/PBCH block. The SS/PBCH block not associated with the RMSI may be used for a synchronization procedure and/or a measurement procedure in the corresponding BWP. The BWP(s) through which the SS/PBCH block is transmitted may be limited to one or more BWPs within a wide bandwidth.

The positions at which the SSBs are transmitted in the time domain may be defined differently according to an SCS and a value of L. In exemplary embodiments, the SCS may mean a subcarrier size. The SSB may be transmitted in some symbols within one slot, and a short UL transmission (e.g., uplink control information (UCI) transmission) may be performed in the remaining symbols not used for the SSB transmission within one slot. When the SSB is transmitted in radio resources to which a large SCS (e.g., 120 kHz SCS or 240 kHz SCS) is applied, a gap may be configured in the middle of consecutive slots including the SSB so that a long UL transmission (e.g., transmission of URLLC traffic) can be performed at least every 1 ms.

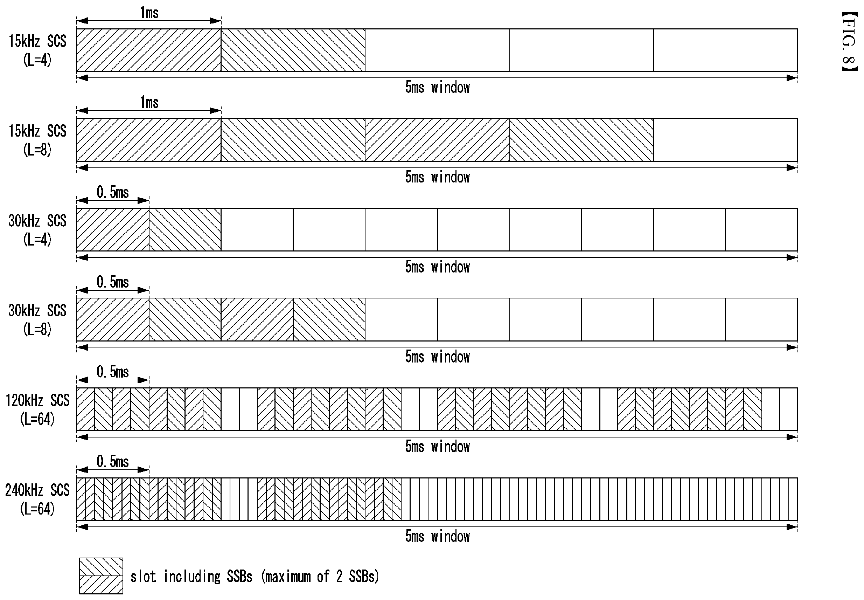

FIG. 8 is a conceptual diagram illustrating a first exemplary embodiment of SSB burst configuration.

Referring to FIG. 8, in a transmission procedure of SSBs (e.g., SSB burst) in radio resources to which a 120 kHz SCS is applied, the base station may transmit SSBs in 8 consecutive slots. In a transmission procedure of SSBs in radio resources to which s 240 kHz SCS is applied, the base station may transmit SSBs in 16 consecutive slots. In the radio resources to which the 120kHz SCS or 240kHz SCS is applied, a gap for UL transmission may be configured.

The RMSI may be obtained by performing an operation to obtain configuration information of a CORESET from the SS/PBCH block (e.g., PBCH), an operation of detecting a PDCCH based on the configuration information of the CORESET, an operation to obtain scheduling information of a PDSCH from the PDCCH, and an operation to receive the RMSI on the PDSCH. A transmission resource of the PDCCH may be configured by the configuration information of the CORESET. A mapping pattern of the RMSI CORESET may be defined as follows. The RMSI CORESET may be a CORESET used for transmission and reception of the RMSI.

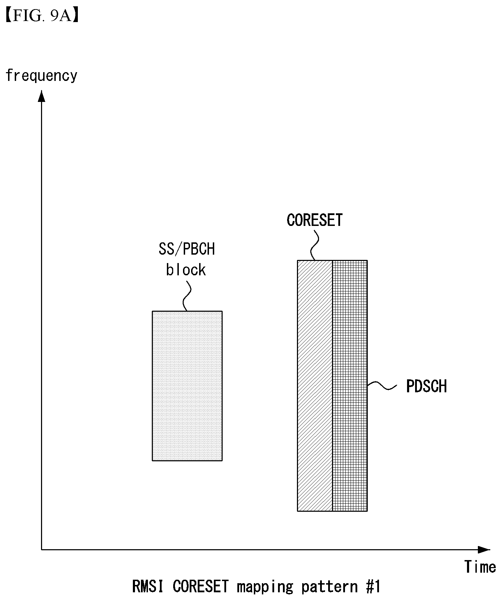

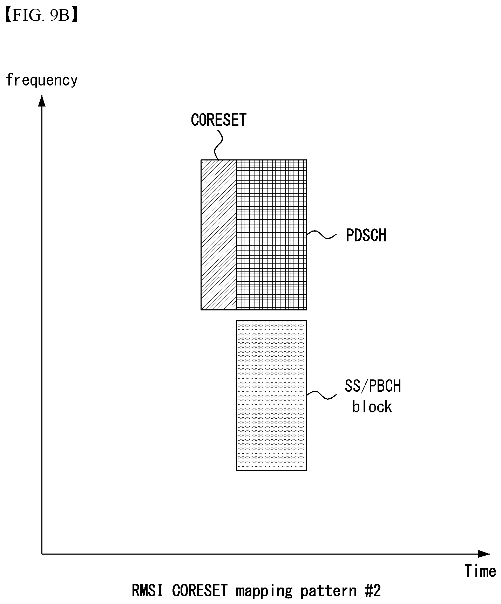

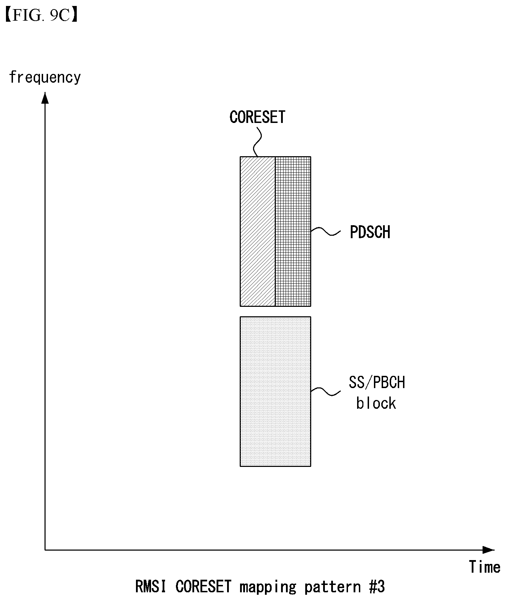

FIG. 9A is a conceptual diagram illustrating an RMSI CORESET mapping pattern #1 in a communication system, FIG. 9B is a conceptual diagram illustrating an RMSI CORESET mapping pattern #2 in a communication system, and FIG. 9C is a conceptual diagram illustrating an RMSI CORESET mapping pattern #3 in a communication system.

Referring to FIGS. 9A to 9C, one RMSI CORESET mapping pattern among the RMSI CORESET mapping patterns #1 to #3 may be used, and a detailed configuration according to the one RMSI CORESET mapping pattern may be determined. In the RMSI CORESET mapping pattern #1, the SS/PBCH block, the CORESET (i.e., RMSI CORESET), and the PDSCH (i.e., RMSI PDSCH) may be configured in a TDM scheme. The RMSI PDSCH may mean the PDSCH through which the RMSI is transmitted. In the RMSI CORESET mapping pattern #2, the CORESET (i.e., RMSI CORESET) and the PDSCH (i.e., RMSI PDSCH) may be configured in a TDM scheme, and the PDSCH (i.e., RMSI PDSCH) and the SS/PBCH block may be configured in a frequency division multiplexing (FDM) scheme. In the RMSI CORESET mapping pattern #3, the CORESET (i.e., RMSI CORESET) and the PDSCH (i.e., RMSI PDSCH) may be configured in a TDM scheme, and the CORESET (i.e., RMSI CORESET) and the PDSCH (i.e., RMSI PDSCH) may be multiplexed with the SS/PBCH block in a FDM scheme.

In the frequency band of 6GHz or below, only the RMSI CORESET mapping pattern #1 may be used. In the frequency band of 6GHz or above, all of the RMSI CORESET mapping patterns #1, #2, and #3 may be used. The numerology of the SS/PBCH block may be different from that of the RMSI CORESET and the RMSI PDSCH. Here, the numerology may be a subcarrier spacing. In the RMSI CORESET mapping pattern #1, a combination of all numerologies may be used. In the RMSI CORESET mapping pattern #2, a combination of numerologies (120kHz, 60kHz) or (240kHz, 120kHz) may be used for the SS/PBCH block and the RMSI CORESET/PDSCH. In the RMSI CORESET mapping pattern #3, a combination of numerologies (120kHz, 120kHz) may be used for the SS/PBCH block and the RMSI CORESET/PDSCH.

One RMSI CORESET mapping pattern may be selected from the RMSI CORESET mapping patterns #1 to #3 according to the combination of the numerology of the SS/PBCH block and the numerology of the RMSI CORESET/PDSCH. The configuration information of the RMSI CORESET may include Table A and Table B. Table A may represent the number of resource blocks (RBs) of the RMSI CORESET, the number of symbols of the RMSI CORESET, and an offset between an RB (e.g., starting RB or ending RB) of the SS/PBCH block and an RB (e.g., starting RB or ending RB) of the RMSI CORESET. Table B may represent the number of search space sets per slot, an offset of the RMSI CORESET, and an OFDM symbol index in each of the RMSI CORESET mapping patterns. Table B may represent information for configuring a monitoring occasion of the RMSI PDCCH. Each of Table A and Table B may be composed of a plurality of sub-tables. For example, Table A may include sub-tables 13-1 to 13-8 defined in the technical specification (TS) 38.213, and Table B may include sub-tables 13-9 to 13-13 defined in the TS 38.213. The size of each of Table A and Table B may be 4 bits.

In the NR system, a PDSCH may be mapped to the time domain according to a PDSCH mapping type A or a PDSCH mapping type B. The PDSCH mapping types A and B may be defined as Table 5 below.

**[Table 5]**

| **PDSCH mapping type** | **Normal CP** | | | **Extended CP** | | |
|---|---|---|---|---|---|---|
| | **S** | **L** | **S+L** | **S** | **L** | **S+L** |
| Type A | {0,1,2,3} (Note 1) | {3,...,14} | {3,...,14} | {0,1,2,3} (Note 1) | {3,...,12} | {3,...,12} |
| Type B | {0,...,12} | {2,4,7} | {2,...,14} | {0,...,10} | {2,4,6} | {2,...,12} |
| Note 1: S=3 is applicable only if *dmrs-TypeA-Position =* 3 | | | | | | |

The type A (i.e., PDSCH mapping type A) may be slot-based transmission. When the type A is used, a position of a start symbol of a PDSCH may be configured to one of {0, 1, 2, 3}. When the type A and a normal CP are used, the number of symbols constituting the PDSCH (e.g., the duration of the PDSCH) may be configured to one of 3 to 14 within a range not exceeding a slot boundary. The type B (i.e., PDSCH mapping type B) may be non-slot-based transmission. When the type B is used, a position of a start symbol of a PDSCH may be configured to one of 0 to 12. When the type B and the normal CP are used, the number of symbols constituting the PDSCH (e.g., the duration of the PDSCH) may be configured to one of {2, 4, 7} within a range not exceeding a slot boundary. A DMRS (hereinafter, referred to as 'PDSCH DMRS') for demodulation of the PDSCH (e.g., data) may be determined by the PDSCH mapping type (e.g., type A or type B) and an ID indicating the length. The ID may be defined differently according to the PDSCH mapping type.

Meanwhile, NR-unlicensed (NR-U) is being discussed in the NR standardization meeting. The NR-U system may increase network capacity by improving the utilization of limited frequency resources. The NR-U system may support operation in an unlicensed band (e.g., unlicensed spectrum).

In the NR-U system, the terminal may determine whether a signal is transmitted from a base station based on a discovery reference signal (DRS) received from the corresponding base station in the same manner as in the general NR system. In the NR-U system in a Stand-Alone (SA) mode, the terminal may acquire synchronization and/or system information based on the DRS. In the NR-U system, the DRS may be transmitted according to a regulation of the unlicensed band (e.g., transmission band, transmit power, transmission time, etc.). For example, according to Occupied Channel Bandwidth (OCB) regulations, signals may be configured and/or transmitted to occupy 80% of the total channel bandwidth (e.g., 20 MHz).

In the NR-U system, a communication node (e.g., base station, terminal) may perform a Listen Before Talk (LBT) procedure before transmitting a signal and/or a channel for coexistence with another system. The signal may be a synchronization signal, a reference signal (e.g., DRS, DMRS, channel state information (CSI)-RS, phase tracking (PT)-RS, sounding reference signal (SRS)), or the like. The channel may be a downlink channel, an uplink channel, a sidelink channel, or the like. In exemplary embodiments, a signal may mean the 'signal', the 'channel', or the 'signal and channel'. The LBT procedure may be an operation for checking whether a signal is transmitted by another communication node. If it is determined by the LBT procedure that there is no transmission signal (e.g., when the LBT procedure is successful), the communication node may transmit a signal in the unlicensed band. If it is determined by the LBT procedure that a transmission signal exists (e.g., when the LBT fails), the communication node may not be able to transmit a signal in the unlicensed band. The communication node may perform a LBT procedure according to one of various categories before transmission of a signal. The category of LBT may vary depending on the type of the transmission signal.

The LBT operation may be performed in various manners depending on presence and scheme of Clear Channel Assessment (CCA). For example, a communication node (e.g., terminal or base station) may transmit a signal without performing CCA. The above-described operation may be referred to as a first category LBT. For another example, a communication node may perform CCA in a sensing period of a fixed length and transmit a signal immediately after the sensing period depending on a result of CCA. Specifically, the communication node may sense a channel in at least a portion (e.g., at least one sensing slot) of the sensing period, and if a received signal strength is equal to or less than a threshold for more than a reference time (e.g., 4 µs), a channel may be determined to be in an idle state. The length of the sensing period may be fixed to one of 25 µs, 16 µs, and 9 µs. The above-described operation may be referred to as a second category LBT, and may also be referred to as 'one-shot LBT' since it includes one CCA.

The length of the sensing period may be variable. A communication node may perform CCA in an initial sensing period, and may transmit a signal immediately after the sensing period if a channel is determined to be in the idle state based on a result of CCA. On the other hand, if the channel is determined to be in a busy state based on the result of CCA, the communication node may extend the sensing period and perform an additional sensing operation in the extended sensing period. The sensing period may be extended by a random backoff scheme, and the length of the extended sensing period may be proportional to a random backoff value. The random backoff value may be determined within a contention window (CW). For example, if the random backoff value and the size of CW are Nᵢₙᵢₜ and CWₚ, respectively, Nᵢₙᵢₜ may be selected as a random value between 0 and CWₚ. Each of Nᵢₙᵢₜ and CWₚ may be an integer. For example, the communication node may additionally perform CCA in Nᵢₙᵢₜ consecutive defer periods, and transmit a signal immediately after the sensing period if the channel is in the idle state during all the sensing slots. In addition, if there is a discrepancy between a completion time of the sensing operation (e.g., a time when a backoff counter value becomes 0) and a time at which the signal is to be transmitted, the communication node may perform a self-defer operation and perform an additional sensing operation immediately before transmission, and transmit the signal according to a result of the additional sensing operation. In the above-described LBT operation, the initial sensing operation may be omitted. The above-described operation may be referred to as a third category LBT or fourth category LBT. For the third category LBT, the size of CW may be fixed. For the fourth category LBT, the size of CW may be adjusted according to a predefined procedure. For example, the size of CW may be changed according to a type of signal to be transmitted, channel access priority class (CAPC), frequency regulation, whether a previous transmission succeeds or not (e.g., HARQ-ACK reception), and/or the like.

In the NR communication system or LTE communication system, the above-described LBT operation schemes may be applied to a channel access procedure for load based equipment (LBE). For example, the first category LBT may be applied to a type 2C channel access procedure, the second category LBT may be applied to type 2A and type 2B channel access procedures, and the fourth category LBT may be applied to a type 1 channel access procedures. Instead of the first, second, third, and fourth category LBTs, they may be expressed as the type 1 or type 2 channel access procedure. The above-described LBT operation schemes may be applied to a channel access procedure for frame based equipment (FBE).

Meanwhile, NR vehicle-to-everything (V2X) communication technology is being discussed in the NR standardization meeting. The NR V2X communication technology may be a technology that supports communication between vehicles, communication between a vehicle and an infrastructure, communication between a vehicle and a pedestrian, and the like based on device-to-device (D2D) communication technologies. Techniques for reducing power consumption and improving reliability are being discussed for NR V2C communication.

The NR V2X communication (e.g., sidelink communication) may be performed according to three transmission schemes (e.g., unicast scheme, broadcast scheme, groupcast scheme). When the unicast scheme is used, a PC5-RRC connection may be established between a first terminal (e.g., transmitting terminal that transmits data) and a second terminal (e.g., receiving terminal that receives data), and the PC5-RRC connection may refer to a logical connection for a pair between a source ID of the first terminal and a destination ID of the second terminal. The first terminal may transmit data (e.g., sidelink data) to the second terminal. When the broadcast scheme is used, the first terminal may transmit data to all terminals. When the groupcast scheme is used, the first terminal may transmit data to a group (e.g., groupcast group) composed of a plurality of terminals. In SL communication (e.g., SL-U communication), a transmitting terminal may mean a terminal transmitting data, and a receiving terminal may mean a terminal receiving the data.

When the unicast scheme is used, the second terminal may transmit feedback information (e.g., acknowledgment (ACK) or negative ACK (NACK)) to the first terminal in response to data received from the first terminal. In the exemplary embodiments below, the feedback information may be referred to as a 'HARQ-ACK', 'feedback signal', a 'physical sidelink feedback channel (PSFCH) signal', or the like. When ACK is received from the second terminal, the first terminal may determine that the data has been successfully received at the second terminal. When NACK is received from the second terminal, the first terminal may determine that the second terminal has failed to receive the data. In this case, the first terminal may transmit additional information to the second terminal based on an HARQ scheme. Alternatively, the first terminal may improve a reception probability of the data at the second terminal by retransmitting the same data to the second terminal.

When the broadcast scheme is used, a procedure for transmitting feedback information for data may not be performed. For example, system information may be transmitted in the broadcast scheme, and the terminal may not transmit feedback information for the system information to the base station. Therefore, the base station may not identify whether the system information has been successfully received at the terminal. To solve this problem, the base station may periodically broadcast the system information.

When the groupcast scheme is used, a procedure for transmitting feedback information for data may not be performed. For example, necessary information may be periodically transmitted in the groupcast scheme, without the procedure for transmitting feedback information. However, when the candidates of terminals participating in the groupcast scheme-based communication and/or the number of the terminals participating in that is limited, and the data transmitted in the groupcast scheme is data that should be received within a preconfigured time (e.g., data sensitive to delay), it may be necessary to transmit feedback information also in the groupcast sidelink communication. The groupcast sidelink communication may mean sidelink communication performed in the groupcast scheme. When the feedback information transmission procedure is performed in the groupcast sidelink communication, data can be transmitted and received efficiently and reliably.

In the groupcast sidelink communication, two HARQ-ACK feedback schemes (i.e., transmission procedures of feedback information) may be supported. When the number of receiving terminals in a sidelink group is large and a service scenario 1 is supported, some receiving terminals belonging to a specific range within the sidelink group may transmit NACK through a PSFCH when data reception fails. This scheme may be a groupcast HARQ-ACK feedback option 1. In the service scenario 1, instead of all the receiving terminals in the sidelink group, it may be allowed for some receiving terminals belonging to a specific range to perform reception in a best-effort manner. The service scenario 1 may be an extended sensor scenario in which some receiving terminals belonging to a specific range need to receive the same sensor information from a transmitting terminal. In exemplary embodiments, the transmitting terminal may refer to a terminal transmitting data, and the receiving terminal may refer to a terminal receiving data.

When the number of receiving terminals in the sidelink group is limited and a service scenario 2 is supported, each of all the receiving terminals belonging to the sidelink group may report HARQ-ACK for data individually through a separate PSFCH. This scheme may be a groupcast HARQ-ACK feedback option 2. In the service scenario 2, since PSFCH resources are sufficient, the transmitting terminal may perform monitoring on HARQ-ACK feedbacks of all the receiving terminals belonging to the sidelink group, and data reception may be guaranteed at all the receiving terminals belonging to the sidelink group.

As in broadcast sidelink communication, data may be transmitted and received without an HARQ-ACK feedback procedure in unicast sidelink communication and groupcast sidelink communication. In this case, in order to increase a probability of receiving the data, a transmitting terminal may retransmit the data a preset number of times.

In all transmission schemes (e.g., unicast transmission, groupcast transmission, and broadcast transmission), whether an HARQ-ACK feedback procedure is applied may be statically or semi-statically configured to the terminal(s) by signaling (e.g., system information signaling, PC5-RRC signaling, UE-specific RRC signaling, control information signaling). In sidelink communication, HARQ-ACK feedback information may be transmitted on a PSFCH. If reception of a PSSCH is successful, a receiving terminal may transmit ACK for the PSSCH (e.g., data) on the PSFCH. If reception of the PSSCH fails, the receiving terminal may transmit NACK for the PSSCH (e.g., data) on the PSFCH. The PSFCH may be a channel for reporting ACK/NACK information (e.g., HARQ-ACK feedback) to the transmitting terminal. A resource region (e.g., PSFCH resource region) for PSFCH transmission (e.g., transmission of HARQ-ACK feedback) may be preconfigured within a specific resource pool. The PSFCH (e.g., PSFCH resource or PSFCH resource region) may be configured periodically. A PSFCH periodicity for the PSFCH resource may be k slots (e.g., logical sidelink (SL) slots). k may be a natural number. For example, k may be 1, 2, or 4.

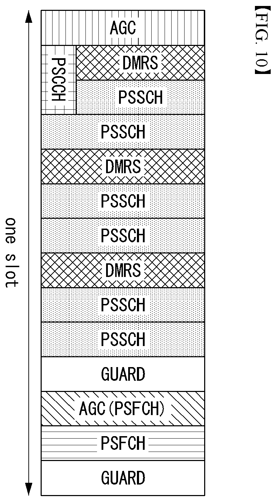

FIG. 10 is a conceptual diagram illustrating a first exemplary embodiment of configuration of a slot in which a PSFCH is configured.

Referring to FIG. 10, a PSFCH (e.g., HARQ-ACK feedback) may be repeatedly transmitted in two symbols (e.g., two OFDM symbols) within a slot (e.g., SL slot). The first symbol among two symbols in which the PSFCH is transmitted may be used for automatic gain control (AGC) for correct PSFCH receive power level adjustment.

The PSFCH may be transmitted within a frequency resource region preconfigured by system information. In this case, the frequency resource region for PSFCH transmission may be indicated (e.g., signaled) in form of a bitmap within the resource pool. The receiving terminal may implicitly select a location of the frequency resource region for PSFCH transmission based on indexes of a slot and a subchannel in which a PSSCH is received. The receiving terminal may identify the number of resource blocks (RBs) and the number of PSFCH resources multiplexable based on cyclic shifts of a PSFCH sequence within the frequency resource region. The receiving terminal may implicitly select a PSFCH index for PSFCH resource(s) based on a source identifier (ID) and a member ID. The source ID may be a physical layer source ID. The source ID may be an ID of a transmitting terminal that has transmitted the PSSCH.

The member ID may be used in the groupcast HARQ-ACK feedback option 2. When the groupcast HARQ-ACK feedback option 2 is applied, each of all receiving terminals within a group may individually transmit an HARQ-ACK feedback for SL data through a separate PSFCH (e.g., PSFCH resource). In a case other than the above-described exemplary embodiment, the member ID may be set to 0.

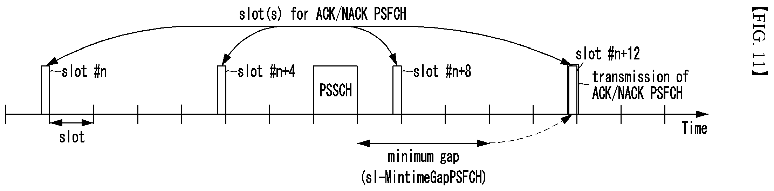

FIG. 11 is a conceptual diagram illustrating a first exemplary embodiment of a PSFCH for ACK/NACK transmission.

Referring to FIG. 11, a transmission time of a PSFCH may be the first slot (e.g., PSFCH slot) in which PSFCH transmission is possible after a preset time (e.g., *sl-MinTimeGapPSFCH*) from a reception time of a corresponding PSSCH. The PSFCH slot may be a slot capable of transmitting a PSFCH and/or a slot in which a PSFCH is configured. *sl-MinTimeGapPSFCH* may be set in consideration of a time required for processing the PSSCH after reception of the PSSCH and a time required for preparing for ACK/NACK (e.g., HARQ-ACK feedback) depending on whether reception of the PSSCH is successful. *sl-MinTimeGapPSFCH* may be set to 2 or 3 slots. The terminal (e.g., receiving terminal) may transmit the PSFCH in a slot #n+12, which is a slot capable of PSFCH transmission, after *sl-MinTimeGapPSFCH* (e.g., 3 slots) from a reception time of the PSSCH. n may be an integer greater than or equal to 0. In the present disclosure, the reception time may mean a reception start time and/or a reception end time, and the transmission time may mean a transmission start time and/or a transmission end time. The time may mean a timing and/or duration.

Data reliability at the receiving terminal may be improved by appropriately adjusting a transmit power of the transmitting terminal according to a transmission environment. Interference to other terminals may be mitigated by appropriately adjusting the transmit power of the transmitting terminal. Energy efficiency can be improved by reducing unnecessary transmit power. A power control scheme may be classified into an open-loop power control scheme and a closed-loop power control scheme. In the open-loop power control scheme, the transmitting terminal may determine the transmit power in consideration of configuration, a measured environment, etc. In the closed-loop power control scheme, the transmitting terminal may determine the transmit power based on a transmit power control (TPC) command received from the receiving terminal.

It may be difficult due to various causes including a multipath fading channel, interference, and the like to predict a received signal strength at the receiving terminal. Accordingly, the receiving terminal may adjust a receive power level (e.g., receive power range) by performing an automatic gain control (AGC) operation to prevent a quantization error of the received signal and maintain a proper receive power. In the communication system, the terminal may perform the AGC operation using a reference signal received from the base station. However, in the sidelink communication (e.g., V2X communication), the reference signal may not be transmitted from the base station. That is, in the sidelink communication, communication between terminals may be performed without the base station. Therefore, it may be difficult to perform the AGC operation in the sidelink communication. In the sidelink communication, the transmitting terminal may first transmit a signal (e.g., reference signal) to the receiving terminal before transmitting data, and the receiving terminal may adjust a receive power range (e.g., receive power level) by performing an AGC operation based on the signal received from the transmitting terminal. Thereafter, the transmitting terminal may transmit sidelink data to the receiving terminal. The signal used for the AGC operation may be a signal duplicated from a signal to be transmitted later or a signal preconfigured between the terminals.

A time period required for the ACG operation may be 15µs. When a subcarrier spacing of 15 kHz is used in the NR system, a time period (e.g., length) of one symbol (e.g., OFDM symbol) may be 66.7 µs. When a subcarrier spacing of 30 kHz is used in the NR system, a time period of one symbol (e.g., OFDM symbol) may be 33.3 µs. In the following exemplary embodiments, a symbol may mean an OFDM symbol. That is, a time period of one symbol may be twice or more than a time period required for the ACG operation.

For sidelink communication, it may be necessary to transmit a data channel for data transmission and a control channel including scheduling information for data resource allocation. In sidelink communication, the data channel may be a physical sidelink shared channel (PSSCH), and the control channel may be a physical sidelink control channel (PSCCH). The data channel and the control channel may be multiplexed in a resource domain (e.g., time and frequency resource domains).

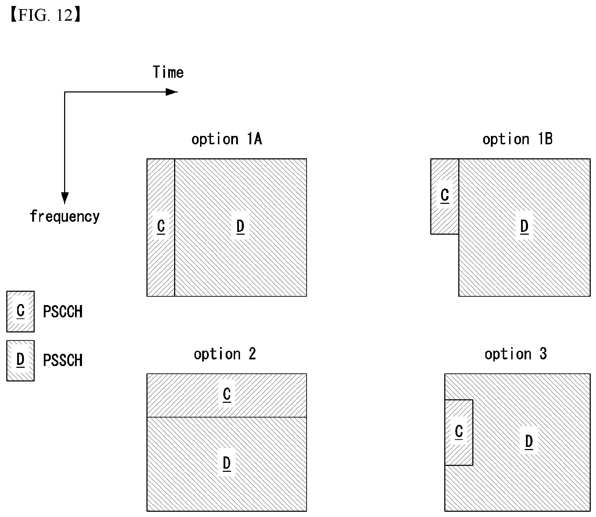

FIG. 12 is a conceptual diagram illustrating exemplary embodiments of a method for multiplexing a control channel and a data channel in sidelink communication.

Referring to FIG. 12, sidelink communication may support an option 1A, an option 1B, an option 2, and an option 3. When the option 1A and/or the option 1B is supported, a control channel and a data channel may be multiplexed in the time domain. When the option 2 is supported, a control channel and a data channel may be multiplexed in the frequency domain. When the option 3 is supported, a control channel and a data channel may be multiplexed in the time and frequency domains. The sidelink communication may basically support the option 3.

In the sidelink communication (e.g., NR-V2X sidelink communication), a basic unit of resource configuration may be a subchannel. The subchannel may be defined with time and frequency resources. For example, the subchannel may be composed of a plurality of symbols (e.g., OFDM symbols) in the time domain, and may be composed of a plurality of resource blocks (RBs) in the frequency domain. The subchannel may be referred to as an RB set. In the subchannel, a data channel and a control channel may be multiplexed based on the option 3.

In the sidelink communication (e.g., NR-V2X sidelink communication), transmission resources may be allocated based on a mode 1 or a mode 2. When the mode 1 is used, a base station may allocate sidelink resource(s) for data transmission within a resource pool to a transmitting terminal, and the transmitting terminal may transmit data to a receiving terminal using the sidelink resource(s) allocated by the base station. Here, the transmitting terminal may be a terminal that transmits data in sidelink communication, and the receiving terminal may be a terminal that receives the data in sidelink communication.

When the mode 2 is used, a transmitting terminal may autonomously select sidelink resource(s) to be used for data transmission by performing a resource sensing operation and/or a resource selection operation within a resource pool. The base station may configure the resource pool for the mode 1 and the resource pool for the mode 2 to the terminal(s). The resource pool for the mode 1 may be configured independently from the resource pool for the mode 2. Alternatively, a common resource pool may be configured for the mode 1 and the mode 2.

When the mode 1 is used, the base station may schedule a resource used for sidelink data transmission to the transmitting terminal, and the transmitting terminal may transmit sidelink data to the receiving terminal by using the resource scheduled by the base station. Therefore, a resource conflict between terminals may be prevented. When the mode 2 is used, the transmitting terminal may select an arbitrary resource by performing a resource sensing operation and/or resource selection operation, and may transmit sidelink data by using the selected arbitrary resource. Since the above-described procedure is performed based on an individual resource sensing operation and/or resource selection operation of each transmitting terminal, a conflict between selected resources may occur.

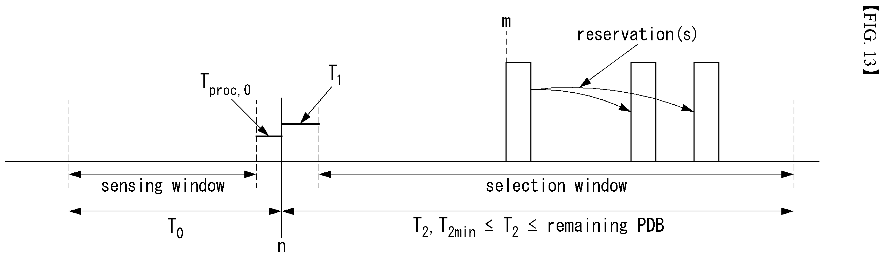

FIG. 13 is a conceptual diagram illustrating a first exemplary embodiment of a resource selection operation.

Referring to FIG. 13, a terminal (e.g., transmitting terminal) may perform a resource sensing operation within a sensing window, and may perform a resource selection operation on resource(s) (e.g., candidate resource(s)) sensed within the selection window. When the resource selection operation is triggered in a time n, the terminal may select suitable resource(s) within the selection window (e.g., a period from a time n+T₁ to a time n+T₂) based on a result of the sensing within the sensing window (e.g., a period from a time n-T₀ to a time n-T_{proc,0}).

Based on the result of the resource sensing operation, the terminal may exclude candidate resource(s) that do not satisfy a condition within the selection window. In other words, the terminal may determine the remaining candidate resources excluding the candidate resource(s) that are not suitable from all candidate resources. When a ratio of the remaining candidate resources among all resources within the selection window is less than a reference ratio, the terminal may relax the condition for excluding the candidate resource(s). For example, the terminal may increase a reference signal received power (RSRP) threshold, which is the condition for excluding candidate resource(s), by 3dB. Thereafter, the terminal may perform the resource selection operation again. The reference ratio may be preset to one of 20%, 35%, or 50% for each priority. When the ratio of the remaining candidate resources is greater than or equal to the reference ratio, the terminal may randomly select final resource(s) to be used for SL transmission among the remaining candidate resources. The terminal may perform SL transmission using the final resource(s).

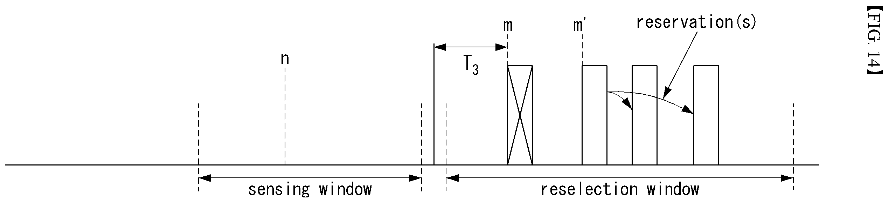

FIG. 14 is a conceptual diagram illustrating a first exemplary embodiment of a resource reselection operation.

Referring to FIG. 14, after the resource selection operation, the terminal may perform a resource reselection operation in consideration of aperiodic data transmission or the like. After performing the operations shown in FIG. 13, the terminal may perform the resource reselection operation by additionally considering a result of sensing at a time m-T₃ before actual SL transmission. The resource reselection operation may be performed within a reselection window. The terminal may further determine suitability of resource(s) reserved at the time m. When it is determined that the resource(s) reserved in the time m is suitable, the terminal may perform SL transmission using the reserved resource(s). When it is determined that the resource(s) reserved at the time m is not suitable, the terminal may reselect resource(s) for SL transmission and perform SL transmission using the reselected resource(s).

When an independent SL carrier is not configured for SL communication, some UL resources among UL resources may be configured as SL resources by an SL resource pool configuration procedure. A bitmap may be repeatedly applied to the remaining slot(s) excluding slot(s) in which at least X or more UL symbols are not configured and slot(s) in which a sidelink (S)-SSB is transmitted among slots within a specific period. X may be a natural number. The bitmap may indicate slot(s) used as SL resources. For example, slot(s) corresponding to bit(s) set to 1 among bits in the bitmap may be used as SL resources.

A case in which a 15 kHz subcarrier spacing (SCS) is applied and X or more UL symbols are configured in all slots may be assumed. When there are 10240 slots available within a direct frame number (DFN), a transmission periodicity of the S-SSB is 160 ms, and there are 2 slots used for S-SSB transmission in each S-SSB transmission period, the number of slots used for S-SSB transmission within a DFN may be 128. A bitmap for configuring SL time resources may include 10 bits. When the bitmap (e.g., bitmap including 10 bits) is repeatedly applied to the remaining 10112 slots excluding 128 slots used for S-SSB transmission among 10240 slots, there may be two slots (e.g., reserved slots) to which the bitmap is not applied. It may be necessary to exclude the two reserved slots. When excluding the two reserved slots from 10112 slots, 10110 slots may remain. The bitmap (e.g., bitmap including 10 bits) may be repeatedly applied 1011 times to 10110 slots. When the bitmap is set to '1111000000' and slots corresponding to bits set to 1 are used as SL resources, 4044 slots may be configured as SL resources within the DFN. In other words, 4044 slots among 10240 slots may be used for SL communication by configuring the SL resource pool.

The sidelink communication system supporting Release-16 may be designed for terminals (e.g., vehicle-mounted terminals, vehicle UEs (V-UEs)) that do not have restrictions on battery capacity. Therefore, a power saving issue may not be greatly considered in resource sensing/selection operations for such the terminals. However, in order to perform sidelink communication with terminals having restrictions on battery capacity in the sidelink communication system supporting Release-17 (e.g., a terminal carried by a pedestrian, a terminal mounted on a bicycle, a terminal mounted on a motorcycle, a pedestrian UE (P-UE)), power saving methods will be required. In the present disclosure, a 'V-UE' may refer to a terminal that has no significant restrictions on battery capacity, a 'P-UE' may refer to a terminal with restrictions on battery capacity, and a 'resource sensing/selection operation' may refer to a resource sensing operation and/or a resource selection operation. The resource sensing operation may refer to a partial sensing operation or a full sensing operation. The resource selection operation may refer to a random selection operation. In addition, in the present disclosure, an 'operation of a terminal' may be interpreted as an 'operation of a V-UE' and/or 'operation of a P-UE'.

For power saving in the LTE V2X, a partial sensing operation and/or a random selection operation has been introduced. When the partial sensing operation is supported, the terminal may perform resource sensing operations in partial periods instead of an entire period within a sensing window, and may select a resource based on a result of the partial sensing operation. According to such the operation, power consumption of the terminal may be reduced.

In the Release-14 LTE V2X, only periodic data transmission and reception operations may be possible. In the Release-14 LTE V2X, the terminal may arbitrarily select candidate slots within a resource selection period (e.g., selection window) in consideration of a preset minimum number, and perform a partial sensing operation in consideration of a periodicity of k×100 ms. k may be signaled by a bitmap (e.g., bitmap including 10 bits). k may be determined according to a position of a bit included in the bitmap. For example, 10 bits included in the bitmap may respectively correspond to values from 1 to 10 from the MSB, and the periodicity may be determined based on a value corresponding to a bit set to 1. The value corresponding to the bit set to 1 may be k.

When the MSB is set to 1 in the bitmap, k may be 1. In this case, the terminal may perform a partial sensing operation in consideration of a periodicity of 100 ms (= 1×100 ms). When a bit next to the MSB in the bitmap is set to 1, k may be 2. In this case, the terminal may perform a partial sensing operation in consideration of a periodicity of 200 ms (= 2×100 ms). When the LSB is set to 1 in the bitmap, k may be 10. In this case, the terminal may perform a partial sensing operation in consideration of a periodicity of 1000 ms (= 10 × 100 ms).

In the Release-14 LTE V2X, the periodicity (e.g., the periodicity of partial sensing operation) may be set to 20 ms or 50 ms. A periodicity of 20 ms or 50 ms may not be supported in a resource pool for a P-UE. In the NR communication system, a shorter periodicity may be supported in addition to {0, 100 ms, 200 ms, ... , 1000 ms}. The short periodicity may be {1 ms, 2 ms, ... , 99 ms}. Up to 16 periodicities may be selected from the resource pool, and the selected periodicities may be preconfigured to the terminal. The terminal may perform the resource sensing operation and/or the resource (re)selection operation using one or more of the configured periodicities. When a random selection operation is supported, the terminal may randomly select a resource without performing a resource sensing operation. Alternatively, the random selection operation may be performed together with the resource sensing operation. For example, the terminal may determine resources by performing the resource sensing operation, and may select resource(s) by performing the random selection operation within the determined resources.

In the LTE V2X supporting Release-14, a resource pool in which the partial sensing operation and/or random selection operation can be performed may be configured independently of a resource pool in which the full sensing operation can be performed. A resource pool capable of performing the random selection operation, a resource pool capable of performing the partial sensing operation, and a resource pool capable of performing the full sensing operation may be independently configured. In other words, a random selection operation, a partial sensing operation, or both a random selection operation and a partial sensing operation may be configured for each resource pool. When both a random selection operation and a partial sensing operation are configured for a resource pool, the terminal may select one operation among the random selection operation and the partial sensing operation, select a resource by performing the selected operation, and use the selected resource to perform SL communication.

In the LTE V2X supporting Release-14, sidelink (SL) data may be periodically transmitted based on a broadcast scheme. In the NR communication system, SL data may be transmitted based on a broadcast scheme, multicast scheme, groupcast scheme, or unicast scheme. In addition, in the NR communication system, SL data may be transmitted periodically or aperiodically. A transmitting terminal may transmit SL data to a receiving terminal, and the receiving terminal may transmit an HARQ feedback (e.g., acknowledgement (ACK) or negative ACK (NACK)) for the SL data to the transmitting terminal on a PSFCH. In the present disclosure, a transmitting terminal may refer to a terminal transmitting SL data, and a receiving terminal may refer to a terminal receiving the SL data.

A terminal having reduced capability (hereinafter, referred to as 'RedCap terminal') may operate in a specific usage environment. The capability of the RedCap terminal may be lower than capability of a new radio (NR) normal terminal, and may be higher than those of an LTE-machine type communication (LTE-MTC) terminal, a narrow band (NB)-Internet of things (IoT) terminal, and a low power wide area (LPWA) terminal. For example, a terminal (e.g., surveillance camera) requiring a high data rate and not high latency condition and/or a terminal (e.g., wearable device) requiring a non-high data rate, high latency condition, and high reliability may exist. In order to support the above-described terminals, the maximum carrier bandwidth in FR1 may be reduced from 100 MHz to 20 MHz, and the maximum carrier bandwidth in FR2 may be reduced from 400 MHz to 100 MHz. The number of reception antennas of the RedCap terminal may be smaller than the number of reception antennas of the NR normal terminal. When the carrier bandwidth and the number of reception antennas are reduced, reception performance at the RedCap terminal may decrease, and accordingly, the coverage of the RedCap terminal may decrease.

The communication system (e.g., NR system) may operate in a frequency band higher than a 52.6 GHz frequency band. As a frequency of the frequency band in which the communication system operates increases, a frequency offset error and a phase noise may increase. The use of a large SCS may be necessary for robust operations in such a environment. In an FR2 band, a 60 kHz SCS and/or a 120 kHz SCS may be supported, and a 480 kHz SCS and/or a 960 kHz SCS may be additionally supported. In addition, design of physical layer signals and channels and physical layer procedures according to the new SCSs may be required. Regarding an initial access procedure, 120 kHz SSBs and/or 240 kHz SSBs may be supported in an FR2 band, and 480 kHz SSBs and/or 960 kHz SSBs may be additionally supported. Here, the 120 kHz SSB may refer to an SSB transmitted in a radio resource to which the 120 kHz SCS is applied, and the 240 kHz SSB may refer to an SSB transmitted in a radio resource to which the 240 kHz SCS is applied. A method for configuring an initial BWP and an SSB burst set pattern for supporting the new SCSs may be required.

In the Release-18, techniques for carrier aggregation (CA) for an improved transmission rate of data on a sidelink, support for operations in an unlicensed spectrum, performance improvement in an FR2 licensed spectrum, and/or co-channel coexistence between LTE SL and NR SL may be discussed.

For sidelink (SL) communication in an unlicensed band (e.g., unlicensed spectrum), as in the NR-U system, a transmission band, transmission power, and/or transmission time according to use of an unlicensed band should be complied with regulation(s). A communication node may perform an LBT operation to identify an occupancy state of a channel before SL communication. It may be preferable to define LBT operations and procedures for channel access suitable for SL communication in the same manner as the NR-U system.

### Contention window (CW) adjustment

A channel access procedure in an unlicensed band may be classified into a type 1 channel access procedure and a type 2 channel access procedure. In case of the type 1 channel access procedure, if a channel is determined to be occupied by another communication node while performing a sensing operation to identify a channel occupancy state, a communication node may extend a sensing period within a CW by using a random backoff scheme, and perform an additional sensing operation in the extended sensing period. The size of CW (i.e., CW size) may be adjusted based on HARQ-ACK/NACK feedback information. For example, when ACK for data is received, the communication node may set the CW size to the smallest value among allowable values. When NACK for data is received, the communication node may set the CW size to the next value greater than a current value among the allowable values. Since an HARQ-ACK/NACK feedback operation is supported in SL unicast communication, the above-described operation may be applied. The above-described operation may not be directly applied to SL groupcast communication and/or SL broadcast communication. The SL unicast communication may mean SL communication performed based on the unicast scheme. The SL groupcast communication may mean SL communication performed based on the groupcast scheme. The SL broadcast communication may mean SL communication performed based on the broadcast scheme.

In case of the groupcast HARQ ACK/NACK feedback option 1, each of terminals in a group may transmit NACK through a common PSFCH resource only when data reception fails. If data reception is successful, the terminals in the group may not transmit ACK (e.g., PSFCH). The above-described HARQ ACK/NACK feedback scheme may be a NACK-only scheme. In this case, a transmitting terminal (e.g., terminal transmitting data) cannot know which terminal in the group failed to receive the data. A case where NACK is not received may occur when all terminals in the group succeeded in receiving the data or when all terminals in the group failed to receive SCI of the transmitting terminal. If NACK is not received, the transmitting terminal may not be able to distinguish between the case when all terminals in the group successfully received the data and the case when all terminals in the group did not receive the SCI of the transmitting terminal. In general, in case of the groupcast HARQ ACK/NACK feedback option 1, only terminals within a certain range may perform NACK feedback. If a NACK feedback is not detected, a probability that all terminals within a certain range succeeded in receiving the data may be higher than a probability that all terminals within a certain range failed to receive SCI. Therefore, if a NACK feedback is not detected, the transmitting terminal may determine that the HARQ ACK/NACK feedback for the data is ACK, and set the CW size to the smallest value among the allowable values.

In case of the groupcast HARQ ACK/NACK feedback option 1, the condition that only terminals within a certain range perform NACK feedback may not be applied. In this case, even if a NACK feedback is not detected, it may be difficult to determine the probability that all terminals in the group succeeded in receiving the data to be higher than the probability that all terminals in the group failed to receive SCI. Alternatively, if a NACK feedback is not detected, the transmitting terminal may maintain the current CW size (e.g., the latest CW size). If a NACK feedback is detected, the transmitting terminal may set the CW size to a value one step larger than the current CW size among the allowable values, similarly to the unicast scheme. In the present disclosure, a value one step larger than a CW size may be the next value larger than the CW size.

Even when a collision indicator (e.g., collision prediction indicator) is transmitted rather than or in addition to a NACK feedback, the above method may be equally applied. Alternatively, a fixed CW size may be applied and the fixed CW size may be set according to a priority or CAPC (e.g., CAPC value) of sidelink transmission data. For example, the fixed CW size may be set differently depending on a priority or CAPC of sidelink transmission data. In the present disclosure, a CAPC may mean a CAPC value or CAPC level. As the CAPC is smaller, the CAPC may have a higher priority, and as the CAPC is larger, the CAPC may have a lower priority.

For example, if data has a high priority or a small CAPC value, the terminal may set a small CW size. If data has a low priority or a large CAPC value, the terminal may set a large CW size. Fixed CW sizes considering priorities or CAPC values may be set in advance or defined by signaling message(s) (e.g., system information, UE-specific RRC message, PC5-RRC message, higher layer signaling message, MAC CE, and/or control information (DCI or SCI)). The fixed CW sizes considering priorities or CAPC values may be set differently for each resource pool.

In case of the groupcast HARQ ACK/NACK feedback option 2, each of terminals in a group may transmit ACK/NACK feedback information through each PSFCH resource. Therefore, a transmitting terminal may identify whether data reception is successful at each terminal (e.g., each receiving terminal). In the present disclosure, a transmitting terminal may refer to a terminal that transmits data, and a receiving terminal may refer to a terminal that receives the data. When the groupcast HARQ ACK/NACK feedback option 2 is used, similarly to the unicast scheme, the transmitting terminal may perform CW size adjustment. However, since the transmitting terminal receives a plurality of ACK/NACK feedbacks according to one data transmission, additional consideration on the plurality of ACK/NACK feedbacks may be required when adjusting the CW size.

For example, when a plurality of ACK/NACK feedbacks are received, and one or more ACK/NACK feedbacks among the plurality of ACK/NACK feedbacks are ACKs, the transmitting terminal may set the CW size to the smallest value among allowable values. Alternatively, when the number of ACKs among the plurality of ACK/NACK feedbacks is equal to or greater than a specific value N, the transmitting terminal may set the CW size to the smallest value among the allowable values. N may be a natural number. When the above-described condition is not satisfied, the transmitting terminal may set the CW size to a value one step larger than the current CW size among the allowable values. Alternatively, when the above-described condition is not satisfied, the transmitting terminal may maintain the current CW size.

Alternatively, when all of the plurality of ACK/NACK feedbacks are NACKs, the transmitting terminal may set the CW size to a value one step larger than the current CW size among the allowable values. Alternatively, when the number of NACKs among the plurality of ACK/NACK feedbacks is equal to or greater than a specific value M, the transmitting terminal may set the CW size to a value one step larger than the current CW size among the allowable values. M may be a natural number. When the above-described condition is not satisfied, the transmitting terminal may set the CW size to the smallest value among the allowable values. Alternatively, when the above-described condition is not satisfied, the transmitting terminal may maintain the current CW size.

Instead of N and M, a ratio threshold (%) for ACKs or NACKs among the plurality of ACK/NACK feedbacks may be applied. An ACK ratio threshold and a NACK ratio threshold may be considered separately. For example, an ACK-related condition (e.g., ACK ratio threshold) may be applied when setting the CW size to the smallest value. A NACK-related condition (e.g., NACK ratio threshold) may be applied when setting the CW size to a value one step larger. When both the ACK-related condition and NACK-related condition are not satisfied, the transmitting terminal may maintain the current CW size. The plurality of ACK/NACK feedbacks may be defined by the number of ACK/NACK feedbacks actually received from receiving terminals.

In case of the groupcast HARQ ACK/NACK feedback option 2, the number of ACK/NACK feedbacks to be fed back may be predicted in advance, and thus the plurality of ACK/NACK feedbacks may be defined by the predicted number of ACK/NACK feedbacks. When (the total number of members in the group - 1) is defined as the predicted number of ACK/NACK feedbacks, a case that there is no HARQ ACK/NACK feedback because terminals in the group did not receive SCI may be considered as NACK. All members within the group may be all terminals or all receiving terminals within the group. N, M, ACK ratio threshold (%), NACK ratio threshold (%), and/or (ACK+NACK) ratio threshold (%) may be set in advance or defined by signaling message(s) (e.g., system information, UE-specific RRC message, PC5-RRC message, higher layer signaling message, MAC CE, and/or control information (e.g., DCI or SCI)).

N, M, ACK ratio threshold (%), NACK ratio threshold (%), and/or (ACK+NACK) ratio threshold (%) be set differently for each resource pool. When one or more ACK/NACK feedbacks are ACKs (hereinafter referred to as 'Alt 1') or when the number of ACKs among the plurality of ACK/NACK feedbacks is greater than or equal to the ACK ratio threshold (hereinafter referred to as 'Alt 2'), the transmitting terminal may apply a method of setting the CW size to the smallest value among allowable values, depending on a situation. For example, if the ACK ratio threshold is not set, the transmitting terminal may adjust the CW size according to Alt 1. If the ACK ratio threshold is set, the transmitting terminal may adjust the CW size according to Alt 2. If the corresponding condition is not satisfied in Alt 1 or Alt 2, the transmitting terminal may set the CW size to a value one step larger among the allowable values. Alternatively, if the corresponding condition is not satisfied in Alt 1 or Alt 2, the transmitting terminal may maintain the CW size.

The CW size adjustment method based on the ACK ratio and/or ACK ratio threshold may be applied identically or similarly to a CW size adjustment method based on the NACK ratio and/or NACK ratio threshold. The CW size adjustment method based on the NACK ratio and/or NACK ratio threshold may be applied identically or similarly to the CW size adjustment method based on the ACK ratio and/or ACK ratio threshold.

In the present disclosure, HARQ-ACK information, HARQ-ACK feedback, HARQ ACK/NACK information, HARQ ACK/NACK feedback, ACK/NACK information, ACK/NACK feedback, HARQ response, HARQ-ACK response, and/or HARQ ACK/NACK response may be used with the same meaning.

The HARQ ACK/NACK feedback function may not be supported in the broadcast scheme. Therefore, the method for CW size adjustment in the unicast scheme and/or groupcast scheme may not be applied to the broadcast scheme. In the unicast method and/or groupcast scheme, the HARQ ACK/NACK feedback function may be disabled. A method for CW size adjustment may be required considering the case where the HARQ ACK/NACK feedback function is disabled. In SL communication, the HARQ ACK/NACK feedback function may be disabled according to two methods. In the first method, PSFCH resources may not be configured in a resource pool, in which case the HARQ ACK/NACK feedback function for all the communication schemes (e.g., unicast scheme, groupcast scheme) may not be supported in the resource pool. In the second method, PSFCH resources may be configured in a resource pool, and the HARQ ACK/NACK feedback function may be disabled by a second-stage SCI.

In SL broadcast communication, SL unicast communication that does not support the HARQ ACK/NACK feedback function, and/or SL groupcast communication that does not support the HARQ ACK/NACK feedback function, it may be preferrable to use a fixed CW size. Here, 'not supporting the HARQ ACK/NACK feedback function' may mean that PSFCH resources are not configured within the corresponding resource pool. The fixed CW size may be set differently depending on a priority or CAPC of SL data. In other words, a fixed CW size may be set independently according to a priority or CAPC of SL data. When SL data has a high priority or a small CAPC, a small CW size may be used. When SL data has a low priority or a large CAPC, a large CW size may be used.

Fixed CW size(s) considering priorities or CAPCs may be set based on at least one of system information, UE-specific RRC message, PC5-RRC message, MAC CE, or control information (e.g., DCI, SCI). Alternatively, fixed CW size(s) considering priorities or CAPCs may be predefined in the technical specifications. The fixed CW size(s) may be set independently for each resource pool. For example, the fixed CW size(s) may be set differently for each resource pool.

When PSFCH resources are configured in a resource pool, and the HARQ ACK/NACK feedback function is disabled by a second-stage SCI, it may be preferable for the CW size not to be changed. In other words, it may be preferable for the CW size to remain at the previous CW size (e.g., the latest CW size). When a second-stage SCI indicates disabling of the HARQ ACK/NACK feedback function in a transmission procedure of data, the previous CW size (e.g., the latest CW size) may be used in a (re)transmission procedure of the data. When the HARQ ACK/NACK feedback function is enabled, the CW size may be adjusted based on ACK(s) and/or NACK(s) for data.

Alternatively, when the HARQ ACK/NACK feedback function is disabled, a fixed CW size set according to a priority or the previous CW size (e.g., the latest CW size) may be used. In the present disclosure, the allowable value(s) and/or allowable range for CW size adjustment may be configured based on at least one of system information, UE-specific RRC message, PC5-RRC message, MAC CE, or control information (e.g., DCI, SCI). Alternatively, the allowable value(s) and/or allowable range for CW size adjustment may be predefined in the technical specifications. The allowable value(s) and/or allowable range for CW size adjustment may be configured independently for each resource pool. For example, the allowable value(s) and/or allowable range for CW size adjustment may be configured differently for each resource pool.

After the CW size is set to the maximum CW size (e.g., the largest CW size) among the allowable values, it may be preferable that the maximum CW size is maintained even when adjustment to a value one step larger than the maximum CW size is required. If the maximum CW size is used continuously, a delay in data transmission may occur. Therefore, if the maximum CW size is used continuously K times, it may be preferable to adjust the maximum CW size to the minimum CW size (e.g., the smallest CW size) among the allowable values. K may be set differently depending on a priority (e.g., priority of data) and/or CAPC. In other words, K may be set independently according to a priority (e.g., priority of data) and/or CAPC. K may be a natural number. K for a high priority may be set to a small value within an allowable range. K for a low priority may be set to a high value within the allowable range.

To adjust the CW size, definition of a reference duration for determining valid HARQ ACK/NACK feedback(s) may be required. The reference duration may consist of consecutive physical slots or logical slots. Some of the physical slots may be configured as logical slots. Therefore, even when the reference duration consists of logical slots, slots included in the reference duration may not be consecutive. When the reference duration consists of physical slots, some of the physical slots may be configured as logical slots used for SL communication. Therefore, a sufficient number of logical slots may not be configured. It may be preferable that the reference duration consists of physical slots from which the minimum number of logical slots can be secured. For example, the reference duration may include a minimum number of physical slots including at least X logical slots. X may be a natural number.

In the SL system (e.g., NR SL system), logical slots may be periodically configured through bitmap signaling based on physical slots. Therefore, the reference duration may be configured in consideration of the bitmap signaling (e.g., signaling of a bitmap pattern) and/or SSB periodicity. X may be set to an appropriate value considering the bitmap (e.g., bitmap pattern) for configuring the logical slots. For example, X may be set through signaling (e.g., SI signaling, RRC signaling, MAC signaling, and/or PHY signaling). Alternatively, X may be predefined in the technical specifications. X may be set per resource pool.

Depending on the bitmap pattern, the number of physical slots required to secure at least X logical slots may be too large. Considering the above situation, the maximum number (e.g., Y) of physical slots may be set. The number of physical slots to secure at least X logical slots may not exceed Y. If X logical slots are not secured within Y physical slots, a duration including the Y physical slots may not be considered as the reference duration. Y may be a natural number.

The reference duration may be defined in different manners. For example, the reference duration may be defined as a duration from a start of a channel occupancy time (COT) initiated by a terminal transmitting PSSCH(s) to an end of the first slot in which at least one PSSCH with HARQ ACK/NACK feedback enabled is transmitted. In this case, a scheme for the HARQ ACK/NACK feedback may be the ACK/NACK feedback scheme and/or the NACK-only feedback scheme. The ACK/NACK feedback scheme may be the ACK/NACK feedback scheme in SL unicast communication or the groupcast HARQ-ACK feedback option 2. The NACK-only feedback scheme may be the groupcast HARQ-ACK feedback option 1.

If there is no PSSCH transmission with HARQ ACK/NACK feedback enabled within the COT, the terminal may determine that the condition of reference duration is not satisfied and may not use the reference duration. Alternatively, if there is no PSSCH transmission with HARQ ACK/NACK feedback enabled within the COT, the reference duration may be defined as a duration from a start of the COT to an end of the COT. Determination related to CW size adjustment may be performed within the reference duration. If the condition of reference duration is not satisfied (e.g., if the reference duration is not configured), the terminal may maintain the latest CW size, set the CW size to the next CW size one step larger than the current CW size, or set the CW size to a CW size preset based on a priority.

If the condition of reference duration is not satisfied, the latest CW size may be maintained. In the above-described situation, if the latest CW size is small and the latest CW size is continuously used, a fair channel access procedure between terminals may not be performed. Therefore, in a situation where the latest CW size is maintained since the condition of reference duration is not satisfied, the latest CW size may be maintained K times. After the latest CW size is maintained K times, it may be preferable to set the latest CW size to the next CW size one step larger. After the maximum CW size is used K times, the maximum CW size may be reset to the minimum CW size. K may be a natural number. K may be set in advance. For example, K may be set to the terminal through signaling (e.g., higher layer signaling). The above-described configuration may be applied only to a resource pool for which PSFCH resources are not configured. The above-described configuration may be applied when SL transmission is not associated with HARQ ACK/NACK feedback regardless of whether PSFCH resources are configured. The above-described exemplary embodiment (e.g., method of adjusting the CW size considering K) may be applied when the HARQ ACK/NACK feedback function is disabled.

In a channel access procedure of an unlicensed band, a COT duration after a sensing period and/or channel occupancy may vary depending on a CAPC. The lower the CAPC, the higher a success probability of the channel access procedure, and the shorter a COT duration occupied by the channel access procedure. Therefore, it may be preferable to set a low CAPC for high priority transmission. In SL-unlicensed (U) communication, it may be required to set an appropriate CAPC depending on a priority of SL transmission. An appropriate CAPC may be set according to a priority of data (e.g., SL data) in SL transmission (e.g., PSCCH transmission and/or PSSCH transmission).

A mapping relationship between priorities and CAPCs of SL data may be configured in the terminal through signaling (e.g., system information (SI) signaling, RRC signaling (e.g., UE-specific RRC signaling), MAC signaling, PHY signaling). Alternatively, the mapping relationship between priorities and CAPCs of SL data may be defined in the technical specifications. Alternatively, a priority and CAPC for SL transmission may be set in the terminal through signaling (e.g., higher layer signaling) before performing the SL transmission.

A PSFCH for transmitting HARQ ACK/NACK feedback for data may be a channel that carries important information for determining whether to perform a retransmission procedure. It may be preferable for a CAPC (e.g., CAPC level) for PSFCH transmission to be set to 1. Alternatively, a CAPC of PSSCH transmission corresponding to PSFCH transmission may be used for the PSFCH transmission. CAPCs of multiple PSFCH transmissions corresponding to multiple PSSCH transmissions may be different. In the above-described situation, the smallest CAPC or the largest CAPC among the CAPCs may be set as a common CAPC, and the common CAPC may be applied to the multiple PSFCH transmissions. Alternatively, the terminal may implementally select an arbitrary CAPC and use the arbitrary CAPC for the PSFCH transmission.

An S-SSB for time and/or frequency synchronization may be an important signal for synchronization between terminals in SL communication. It may be preferable for a CAPC (e.g., CAPC level) for an S-SSB to be set to 1. Alternatively, a CAPC for an S-SSB may be set according to a priority of a terminal transmitting the S-SSB (e.g., synchronization reference (SyncRef) terminal, synchronization terminal). A CAPC for an S-SSB may be set to the terminal through signaling (e.g., SI signaling, RRC signaling (e.g., UE-specific RRC signaling), MAC signaling, and/or PHY signaling). Alternatively, a CAPC for an S-SSB may be defined in the technical specifications. Alternatively, a terminal (e.g., synchronization reference terminal, synchronization terminal) may implementally select an arbitrary CAPC and use the arbitrary CAPC for S-SSB transmission.

### COT sharing

In unlicensed band communication (e.g., NR-U communication, SL-U communication), a first communication node (e.g., base station, terminal) may occupy a channel for a certain time period by performing an LBT procedure. The time period occupied by the first communication node may be a COT. The first communication node may acquire the COT by performing the LBT procedure and share the COT with a second communication node. The operation may be a COT sharing operation. The second communication node may transmit a signal during a duration of the shared COT. In this case, the second communication node may improve a probability of signal transmission within the shared COT by performing the type 2 channel access procedure instead of the type 1 channel access procedure. The first communication node (e.g., base station or terminal) may acquire the COT and inform the second communication node (e.g., terminal or base station) of information on the acquired COT through signaling.

In SL-U communication, a first terminal may acquire a COT and share the acquired COT with a second terminal. The first terminal may transmit information on the acquired COT to the second terminal through signaling (e.g., RRC signaling (e.g., PC5-RRC signaling), MAC CE signaling, PHY signaling). The PHY signaling may be transmission of a first-stage SCI and/or second-stage SCI. The information on the acquired COT may be transmitted from the first terminal to one terminal or multiple terminals.

In unicast SL communication, the first terminal may acquire the COT by performing an LBT procedure (e.g., type 1 channel access procedure). The COT may be acquired when the LBT procedure succeeds. The first terminal may perform SL communication (e.g., unicast SL communication) with the second terminal within the acquired COT. The first terminal may transmit information on the remaining COT after the SL communication with the second terminal. The information on the remaining COT may be transmitted to the second terminal and/or a third terminal, and the remaining COT may be shared with the second terminal and/or the third terminal. The second terminal that is a transmission target of the first terminal or a terminal (e.g., third terminal) other than the second terminal may perform SL communication within the COT shared by the first terminal. In this case, it may be preferable for the second terminal to perform SL communication with the first terminal within the COT shared by the first terminal. It may be preferable for the third terminal to perform SL communication with the first terminal within the COT shared by the first terminal.

In the COT sharing-based SL communication, the first terminal may refer to a terminal initiating the COT, the second terminal may refer to a terminal performing SL communication with the first terminal within the COT initiated by the first terminal, the third terminal may refer to a terminal not performing SL communication with the first terminal within the COT initiated by the first terminal, and the COT initiated by the first terminal may be shared with the second terminal and/or the third terminal.

If a terminal using the shared COT (hereinafter referred to as 'shared terminal' or 'responding terminal') is the second terminal, information on the shared terminal may be indicated by a destination identifier (ID) (e.g., ID of the second terminal) included in an SCI transmitted by the first terminal. In this case, additional information to indicate the shared terminal may not be needed. If the shared terminal is the third terminal, it may be preferable that information on the shared terminal (e.g., ID of the third terminal) is included in COT sharing information (e.g., information on the remaining COT). When the remaining COT is shared with a plurality of third terminals, COT sharing information (e.g., information on the remaining COT) may include IDs of the plurality of third terminals. In this case, the shared terminals may be indicated according to the order of IDs included in the COT sharing information. The COT sharing information may include a source ID and a destination ID. In this case, the source ID may be a source ID of the second or third terminal, and the destination ID may be a destination ID of the first terminal. In addition, the COT sharing information may include a cast type indicator, and the cast type indicator may indicate that SL unicast communication, SL groupcast communication, or SL broadcast communication is performed. In other words, the cast type indicator may indicate the cast type of SL communication.

Alternatively, the third terminal may be limited to terminal(s) located within a specific range. In this case, the COT sharing information may include information on a reference of the specific range instead of the ID of the third terminal. The information on the reference of the specific range may be information on a communication range. The communication range may be determined based on a distance between the first terminal and the third terminal and/or a distance between the second terminal and the third terminal. The distance between the first terminal and the third terminal may be calculated based on a zone ID included in an SCI (e.g., first-stage SCI and/or second-stage SCI). A zone ID of the first terminal may be included in COT information (e.g., COT sharing information) instead of the SCI. In this case, the distance between the first terminal and the third terminal may be calculated based on the zone ID included in the COT information. A zone ID of the second terminal may be included in the COT information. In this case, the distance between the second terminal and the third terminal may be calculated based on the zone ID included in the COT information.

Whether the shared terminal is the second terminal or the third terminal may be determined according to whether the COT information includes information on the ID of the third terminal and/or information on the reference for selection of the third terminal (e.g., information on a communication range). For example, when the COT information does not include information on the ID of the third terminal and/or information on the reference for selection of the third terminal, the second terminal may be the shared terminal. When the COT information includes information on the ID of the third terminal and/or information on the reference for selection of the third terminal, the third terminal may be the shared terminal. In this case, the second terminal and the third terminal may be the shared terminals.

An additional indication (e.g., separate indicator) may inform whether the COT information includes information on the third terminal (e.g., information on the ID of the third terminal and/or information on the reference for selection of the third terminal). As another method, a 2-bit indication (e.g., 2-bit indicator) may indicate that only the second terminal can be the shared terminal, that only the third terminal can be the shared terminal, or that both the second terminal and the third terminal can be the shared terminals. The indication may be included in the COT information and/or SCI. It may be configured implicitly that both the second terminal and the third terminal are configured as shared terminals and the second terminal has a higher priority than the third terminal. Alternatively, it may be configured through an additional indication that both the second terminal and the third terminal are configured as shared terminals and the second terminal has a higher priority than the third terminal. When the shared terminal performs SL communication within the remaining COT, a target terminal for the SL communication may be limited to the first terminal that initially shared the COT. Alternatively, when the shared terminal performs SL communication within the remaining COT, a target terminal for the SL communication may be a terminal other than the first terminal that initially shared the COT. The target terminal may be a terminal that performs SL communication with the shared terminal within the remaining COT.

When SL groupcast communication or SL broadcast communication is performed, a plurality of terminals may have the same destination ID. In this case, a plurality of second terminals may exist, and the plurality of second terminals may be shared terminals. In other words, when COT information (e.g., COT sharing information) is transmitted, the plurality of second terminals may become shared terminals. When a shared terminal performs SL groupcast communication or SL broadcast communication within the remaining COT, a target terminal for the SL groupcast communication or SL broadcast communication may be limited to one or more terminals (e.g., one or more second terminals) with the same destination ID as the shared terminal. The first terminal may also have the same destination ID as the shared terminal. The COT information of the SL groupcast communication or SL broadcast communication may include only the destination ID, excluding a source ID. In this case, a source ID portion may be reserved. In addition, the COT information may include a cast type indicator. The cast type indicator may indicate that SL unicast communication, SL groupcast communication, or SL broadcast communication is performed. In other words, the cast type indicator may indicate the cast type of SL communication.

In SL broadcast communication, all terminals may have the same destination ID. Therefore, target terminal(s) of the SL broadcast communication may not be limited to a specific terminal or specific terminal group. The target terminal(s) of the SL groupcast communication may be limited to a specific terminal group with the same destination ID. When a shared terminal performs SL groupcast communication within the remaining COT, target terminal(s) for the SL groupcast communication may be terminal(s) other than a terminal having the same destination ID as the shared terminal.

In SL unicast communication, COT information may include information on the ID of the third terminal, information on the reference for selection of the third terminal, and/or indication for setting priorities between the second terminal and the third terminal. The above-described operation in the SL groupcast communication or the SL broadcast communication may be applied to the SL unicast communication. A plurality of terminals (e.g., a plurality of second terminals) having the same destination ID may become shared terminals. If coordination is not performed between the shared terminals, a conflict between the shared terminals may occur.

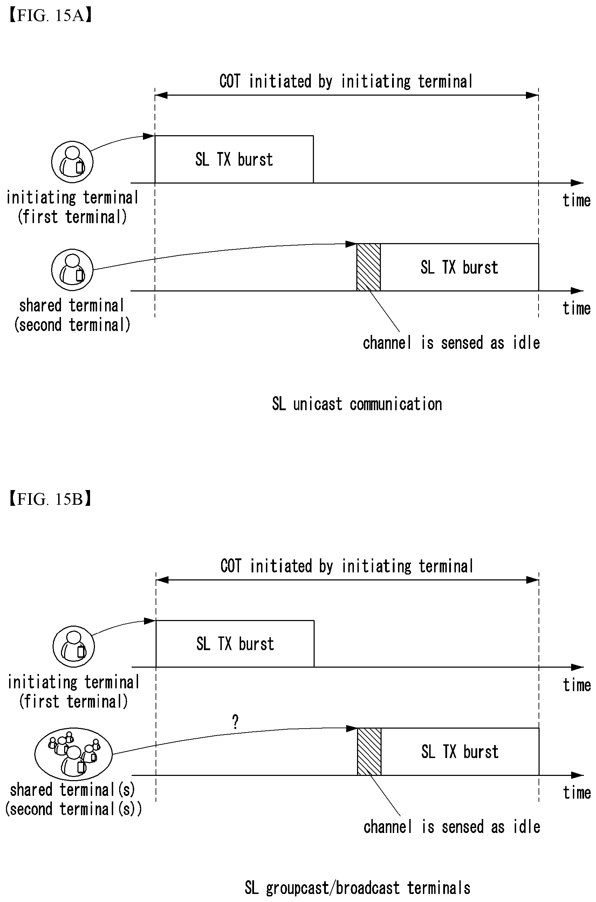

FIG. 15A is a conceptual diagram illustrating a first exemplary embodiment of a COT sharing method in SL communication, and FIG. 15B is a conceptual diagram illustrating a second exemplary embodiment of a COT sharing method in SL communication.

Referring to FIGS. 15A and 15B, the second terminal(s) may be shared terminal(s) in SL unicast communication, SL groupcast communication, and/or SL broadcast communication. In the SL unicast communication shown in FIG. 15A, one second terminal may exist, and the one second terminal may be a shared terminal. In the SL groupcast communication and/or SL broadcast communication shown in FIG. 15B, a plurality of second terminals may exist, and a separate reference or signaling for indicating or configuring shared terminal(s) among the plurality of second terminals may be required. When the separate reference or signaling does not exist, it may be determined that all of the plurality of second terminals are shared terminals, and when the plurality of second terminals perform SL communication within the remaining COT, a conflict (e.g., data collision) between transmissions of the terminals may occur frequently.

In SL unicast communication, a plurality of third terminals may be shared terminals. In this case, a conflict (e.g., data collision) between transmissions of the terminals may occur frequently. When a plurality of terminals (e.g., second terminal(s) and/or third terminal(s)) are configured as shared terminals in SL unicast communication or when a plurality of terminals (e.g., second terminal(s) and/or third terminal(s)) are configured as shared terminals in SL groupcast communication and/or SL broadcast communication, additional signaling information for setting priorities to prevent a conflict between the terminals may be included in the COT information.

When the SL groupcast communication is performed based on a managed groupcast scheme, priorities between terminals may be set through signaling of member IDs within a group. In the managed groupcast scheme, a terminal may know information about all terminals in the group. For example, the COT information may include a member ID of a terminal with a priority (e.g., high priority), and the COT information may be transmitted. If there are multiple terminals with priorities (e.g., high priority), the COT information may include member IDs of the multiple terminals. The priorities may be determined according to the order of member IDs within the COT information. For example, a terminal corresponding to the first member ID among the member IDs in the COT information may have the highest priority. Alternatively, a terminal corresponding to the last member ID among the member IDs in the COT information may have the highest priority.

When the SL groupcast communication is performed based on a connection-less groupcast scheme or when a plurality of third terminals can be shared terminals regardless of the type of SL communication (e.g., unicast, groupcast, broadcast), it may be difficult to configure a specific terminal to have a priority (e.g., high priority). In the connection-less groupcast scheme, a terminal may not know information on terminals in the group. In order to prevent a conflict between terminals in the above-described situation, start times of cyclic prefix extensions (CPEs) may be set differently by applying different start time offsets to a plurality of candidate shared terminals.

For example, if a start time of a CPE of a specific terminal (e.g., terminal #A) is the earliest among a plurality of candidate shared terminals, the terminal #A may occupy the COT, and perform SL communication within the COT. In this case, terminal(s) excluding the terminal #A among the plurality of candidate shared terminals may not succeed in LBT operation(s), and thus may not be able to perform SL communication. In the above-described situation, a conflict between the terminals may be prevented. The offsets for the start times of the CPEs of the plurality of candidate shared terminals may be set randomly. The offsets for the start times of the CPEs of the plurality of candidate shared terminals may be set according to a CAPC of SL data. Alternatively, the offsets for the start times of the CPEs of the plurality of candidate shared terminals may be set randomly within a plurality of candidate values set according to the CAPC of SL data.

The lower the CAPC, the higher a transmission priority of data may be. Therefore, it may be preferable to set a start time or a start range of a CPE for a low CAPC early in the time domain. A start time or start range of a CPE may be set based on a priority instead of a CAPC. The offset of the start time of the CPE may be set in units of 9 µs. The offset of the start time of the CPE may be set within a range of up to 72 µs.

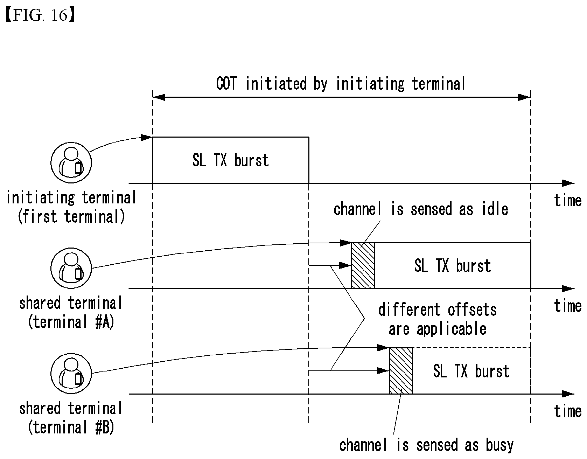

FIG. 16 is a conceptual diagram illustrating a first exemplary embodiment of different offsets for shared terminals.

Referring to FIG. 16, to prevent a conflict between terminals, different offsets may be applied to different shared terminals (e.g., terminal #A and terminal #B). The first terminal (e.g., initiating terminal) may initiate a COT and share the initiated COT. Different offsets within the COT initiated by the first terminal may be applied to shared terminals (e.g., candidate shared terminals). By applying different offsets, the terminal #A may perform a channel sensing operation (e.g., LBT operation) before the terminal #B, and may perform SL communication when a channel is sensed to be idle.

The terminal #B may perform a channel sensing operation, and if a channel is sensed to be busy, the terminal #B may postpone or give up SL communication. Due to the terminal #A's occupation of the channel, the terminal #B may determine that the channel is busy. A start time of each channel sensing operation of the terminal #A and terminal #B may be determined based on an offset. When different offsets are applied, a conflict between the terminals may be prevented. A reference for applying the different offsets may be random selection, CAPC, and/or priority.

In addition to the COT sharing method for general data transmission, methods for transmission of specific signals and/or specific channels may be required. An S-SSB may be used to acquire time synchronization and/or frequency synchronization of a terminal. If S-SSB transmission is required without distinction between the second terminal and the third terminal, the S-SSB may be transmitted within the COT shared by the first terminal. If one or more PSFCHs among a plurality of PSFCHs transmitted by the second terminal include an HARQ ACK/NACK feedback for data transmitted by the first terminal, the second terminal may transmit PSFCH(s) within the COT shared by the first terminal. The PSFCH may refer to a channel for transmission of an HARQ ACK/NACK feedback for data. The PSFCH may mean an HARQ ACK/NACK feedback for the data

Alternatively, if PSFCH(s) transmitted by the second terminal and/or the third terminal do not include an HARQ ACK/NACK feedback for data transmitted by the first terminal, the second terminal and/or the third terminal may transmit PSFCH(s) within the COT shared by the first terminal. An additional signaling (e.g., 1-bit indication) indicating whether the above-described operation is supported may be required. The above-described operation may be performed without distinction between the second terminal and the third terminal. When the operation of transmitting PSFCH(s) without distinction between the second terminal and the third terminal within the COT shared by the first terminal is enabled by the additional signaling, the second terminal and/or the third terminal may transmit PSFCH(s) (e.g., HARQ ACK/NACK feedback(s) for data transmitted by a terminal other than the first terminal) within the COT shared by the first terminal. When the operation of transmitting PSFCH(s) without distinction between the second terminal and the third terminal within the COT shared by the first terminal is disabled by the additional signaling, the second terminal and/or the third terminal may not transmit PSFCH(s) (e.g., HARQ ACK/NACK feedback(s) for data transmitted by a terminal other than the first terminal) within the COT shared by the first terminal. The additional signaling information may be included in COT sharing information (e.g., COT information).

The first terminal may acquire a COT, and transmit COT information (e.g., COT sharing information) to other terminal(s) (e.g., second terminal and/or third terminal) to share the COT with the other terminal(s). The COT information may include information on the remaining COT duration. The COT information may include purely information on the remaining COT duration. In this case, the remaining duration of the COT after the SL transmission of the first terminal may be signaled through a starting offset and/or a sharing offset. In case that the start offset and/or shared offset are signaled, the above-described operation (e.g., COT sharing operation) may be possible when PSFCH(s) of the shared terminal(s) (e.g., second terminal and/or third terminal) are transmitted to the first terminal in slot(s) before the start offset and/or shared offset. The above-described operation (e.g., COT sharing operation) may be possible even when PSFCH(s) of the shared terminal(s) (e.g., second terminal and/or third terminal) are transmitted to another terminal instead of the first terminal.

The remaining COT may be a portion remaining after the SL communication of the first terminal within the COT acquired by the first terminal. The information on the duration of the remaining COT may be time information. The duration of the remaining COT may be defined in units of a time unit (e.g., ms). Alternatively, the duration of the remaining COT may be defined by the number of symbols or the number of slots (e.g., the number of physical slots or the number of logical slots).

The COT information may include information on a frequency (frequency information) of the COT. The frequency information of the COT may include at least one of a start position of a subchannel, number of consecutive subchannels, start index of an interlace, number of consecutive interlaces, index of a resource pool, or index of an RB set. If the COT information does not include the frequency information, all frequency regions (e.g., all subchannels, all interlaces, all RB sets) within an RB set or resource pool in which the COT information is transmitted may be interpreted as frequency regions of the COT.

The COT information may include information for selection of shared terminal(s). The information for selection of shared terminal(s) may include the ID of the third terminal and/or information of a reference (e.g., distance information) for selecting the third terminal. Information indicating whether the information for selection of shared terminal(s) is included may be included in the COT information. An indication on which terminal can become a shared terminal may be included in the COT information. A CAPC may be included in the COT information. A smaller CAPC may have a higher priority, and a lager CAPC may have a lower priority. The CAPC may be a reference indicating a priority according to QoS of data. When the COT information includes a specific CAPC and a CAPC of SL communication of a shared terminal is less than or equal to the specific CAPC, the shared terminal may perform the SL communication within the corresponding COT. For the above-described operation, a priority of SL data may be used instead of the CAPC. If there are a plurality of CPE start positions, a specific CPE start position may be included in the COT sharing information (e.g., COT information). If a PSFCH transmission period exists within the COT, and a common interlace of PSFCHs exists instead of a CPE in the PSFCH transmission period, PSFCH transmission may be replaced by transmission of the common interlace.

### Cyclic prefix extension (CPE)

In an unlicensed band, a communication node may extend a CP to maintain a channel occupied due to a success of an LBT operation from a time at which the LBT operation succeeds until an actual transmission time. The CPE may be transmitted from a start position of the CPE (hereinafter referred to as 'CPE start position') until a start time of the next AGC symbol. One or more CPE start positions may be configured. If one CPE start position is configured, all terminals may have the same CPE start position. Therefore, when multiple terminals perform SL communication using non-overlapping resources, a frequency division multiplexing (FDM) operation may be possible. When all terminals start CPEs at the same time and all the terminals perform initial SL transmissions, if information on resources of the terminals is not obtained in advance, a resource overlap between the terminals may not be identified. In the above-described situation, an SL transmission with a high priority may collide with an SL transmission with a low priority. In addition, an SL transmission in all resources may collide with an SL transmission in some resources. Due to the collision of the SL transmissions, the performance of SL communication may be degraded.

The CPE start positions may be set differently depending on priorities. For example, for high priority SL transmission, a CPE start position may be configured to an earlier position in the time domain. A plurality of CPE start positions may be configured, and an SL transmission with a high priority may be performed based on an early CPE start position. Accordingly, the performance of the SL transmission with the high priority may be guaranteed preferentially.

Even when resource regions of a plurality of terminals do not overlap, high-priority SL transmission is performed based on an early CPE start position, and thus an FDM operation may not be possible. Therefore, resource efficiency may decrease. To solve the above-described problem, when a plurality of CPE start positions are configured, an early CPE start position among the plurality of CPE start positions may be configured to apply only to an SL transmission with a priority equal to or higher than a specific priority. Among the plurality of CPE start positions, the early start position may be configured to apply when resources required for the SL transmission are the entire resource pool and/or RB set or when the resources required for the SL transmission are equal to or more than X% of the resource pool and/or RB set. X may be a natural number.

Alternatively, the early CPE start position among the plurality of CPE start positions may be configured to apply when a priority of the SL transmission is equal to or higher than a specific priority and resources required for the SL transmission are the entire resource pool and/or RB set. Alternatively, the early start position among the plurality of CPE start positions may be configured to apply when a priority of SL transmission is equal to or higher than a specific priority and the resources required for the SL transmission are equal to or more than X% of the resource pool and/or RB set. If the above-described condition(s) are not satisfied, a default CPE start position may be applied. In this case, an FDM operation between the plurality of terminals may be possible, and resource efficiency may be improved.

Alternatively, multiple CPE start positions may be configured to apply when resources required for the SL transmission are the entire resource pool and/or RB set or when the resources required for the SL transmission are equal to or more than X% of the resource pool and/or RB set. A default CPE start position may be configured to apply when the resources required for the SL transmission are less than X% of the resource pool and/or RB set. In this case, an FDM operation between the plurality of terminals may be possible. When multiple CPE start positions are applied, an SL transmission with a high priority may be performed based on an early CPE start position. The default CPE start position may be set to a specific CPE start position among the multiple CPE start positions. For example, the default CPE start position may be set to the earliest CPE start position, the latest CPE start position, or a middle CPE start position among the multiple CPE start positions.

Alternatively, regardless of the size of resources required for an SL transmission, the SL transmission may be performed based on a CPE start position preconfigured according to a priority. The default CPE start position may be applied to reserved resources. The default CPE start position may be applied when reservation information for a resource to which the default CPE start position is to be applied is identified. Since the terminal may identify reserved resources by performing a resource sensing operation, an FDM operation may be performed relatively easily when the reserved resources are a part of frequency resources. Therefore, resource efficiency may be improved.

Based on a result of a resource sensing operation, a transmitting terminal may identify that resource(s) available for transmission do not overlap with reserved resource(s) of other terminal(s). In this case, the transmitting terminal may perform SL transmission based on the default CPE start position. If the SL transmission of the transmitting terminal and SL transmission(s) of other terminal(s) are performed at the same time, the other terminal(s) may also perform the SL transmission(s) based on the default CPE start position. Therefore, an FDM operation between the plurality of terminals may be possible.

CPE start position(s) may be configured according to a priority. One CPE start position or multiple CPE start positions may be configured for each priority. When a plurality of CPE start positions are configured for each priority, the terminal may randomly select one CPE start position among the plurality of CPE start positions. To support an FDM operation between a plurality of terminals, SL transmissions of the plurality of terminals may be performed based on CPE start position(s) corresponding to the highest priority for the SL transmissions.

The priority and/or X may be set or indicated to the terminal through signaling (e.g., SI signaling, UE-specific RRC signaling, PC5-RRC signaling, MAC CE signaling, PHY signaling (e.g., DCI and/or SCI)). Alternatively, the priority and/or X may be predefined in the technical specifications. The priority and/or X may be set for each resource pool. Whether to support one CPE start position or multiple CPE start positions may be configured for each resource pool.

Even when multiple CPE start positions are configured, PSFCH transmission and/or S-SSB transmission may be performed based on a common CPE start position. The common CPE start position may be the earliest CPE start position or the latest CPE start position among the multiple CPE start positions. When multiple CPE start positions are configured, it may be preferable for the S-SSB to be transmitted based on a common CPE start position. Even when one common CPE start position is configured for S-SSB transmission, the one common CPE start position may vary depending on a situation. For example, a common CPE start position for S-SSB transmission within the COT may be different from a common CPE start position for S-SSB transmission outside the COT.

A common CPE start position for a specific situation may be configured, and the common CPE start position may be configured differently depending on each situation. Multiple CPE start positions may be configured according to a priority of a synchronization reference terminal performing S-SSB transmission. For example, a synchronization reference terminal with a higher priority may perform SL transmission (e.g., S-SSB transmission) based on an earlier CPE start position, and a synchronization reference terminal with a lower priority may perform SL transmission (e.g., S-SSB transmission) based on a later CPE start position. By configuring the above-described operations, S-SSB transmission of the synchronization reference terminal with the higher priority may be guaranteed.

Multiple CPE start positions may be configured for each priority. Alternatively, multiple CPE start positions may be configured for each priority set. When a priority of PSFCH transmission is equal to or higher than a specific priority, it may be preferable to perform the PSFCH transmission based on an early CPE start position among the multiple CPE start positions. When multiple CPE start positions are configured for each priority, a PSFCH transmission with a higher priority may be performed based on an earlier CPE start position, and a PSFCH transmission with a lower priority may be performed based on a later CPE start position. According to the above-described operation, the PSFCH transmission with the higher priority may be guaranteed.

The priority may be replaced by a CAPC. The present disclosure may be applied when two or more CPE start positions are configured. When N CPE start positions are configured, a priority and/or X for each CPE start position may be set individually. Alternatively, a priority for each CPE start position may be set individually, and one X for N CPE start positions may be commonly applied. The technique for preventing a collision between terminals according to configuration of multiple CPE start positions may be applied between shared terminals (e.g., candidate shared terminals). In this case, the terminal (e.g., shared terminal) may perform SL transmission based on a CPE start position.

### Multi-consecutive slots transmission (MCSt)

When an SL transmission is performed within a COT acquired by a terminal or a COT shared by another terminal, a situation in which the SL transmission is interrupted may occur. In this case, within a time period in which the SL transmission is interrupted, another terminal or a communication node supporting another radio access technology (RAT) may occupy a channel by performing an LBT operation. In this case, the COT may be lost. To maintain the COT, continuous SL transmission may be required, and it may be preferable to enable SL transmission in consecutive slots. When the SL transmission is performed in consecutive slots, a resource selection operation may be required to support the above-described operation.

One transport block (TB) or multiple TBs may be transmitted in a slot. In the existing resource selection operation, a higher layer of the terminal may deliver to a physical layer of the terminal a parameter set including a priority of a TB, remaining packet delay budget (PDB), number of required subchannels, and/or resource reservation periodicity at a time of generating the TB. When the parameter set is delivered from the higher layer to the physical layer, a resource selection operation may be triggered. The physical layer of the terminal may report a candidate resource set including candidate resources to the higher layer of the terminal by referring to the parameter set. The higher layer of the terminal may randomly select candidate resources from within the candidate resource set, and perform SL transmission using the selected candidate resources.

When different TBs are transmitted in consecutive slots, parameter sets for resource selection for the different TBs may be the same or different. If parameter sets for resource selection for a plurality of TBs are the same, the terminal may perform a resource selection operation based on one parameter set. If the parameter sets for resource selection for a plurality of TBs are different, the terminal may perform a resource selection operation based on the multiple parameter sets. When the terminal selects candidate resources in consecutive slots based on the multiple parameter sets, the complexity of the terminal may increase.

When times of generating a plurality of TBs are different, higher layer triggering for each of the plurality of parameter sets may be performed sequentially. In this case, a candidate resource set suitable for each of the plurality of parameter sets may be configured, and the candidate resource sets may be reported to the higher layer. The higher layer may preferentially select candidate resources in consecutive slots based on each of the candidate resource sets. When it is difficult to select candidate resources in consecutive slots in which the plurality of TBs are transmitted, candidate resources for a TB with a higher priority among the plurality of TBs may be selected preferentially, and SL transmission (e.g., TB transmission) may be performed using the selected candidate resources. A resource selection operation for the remaining TB(s) among the plurality of TBs may be abandoned. Alternatively, the resource selection operation for the remaining TB(s) among the plurality of TBs may be postponed to a later transmission time.

If times of generating a plurality of TBs are almost the same, higher layer triggering for the sequential resource selection operations may be impossible. In this case, the higher layer of the terminal may preferentially trigger a resource selection operation for a TB with a higher priority among the plurality of TBs. A resource selection operation for the remaining TB(s) among the plurality of TBs may be abandoned. Alternatively, the resource selection operation for the remaining TB(s) among the plurality of TBs may be postponed to a later transmission time.

When the resource selection operation for the remaining TB(s) among the plurality of TBs is abandoned or when the resource selection operation for the remaining TB(s) among the plurality of TBs is postponed, it may be preferable to perform SL transmission continuously in order to maintain the COT. Therefore, the transmitting terminal may maintain the COT by performing repeated SL transmissions for the preferentially selected TB. If a receiving terminal knows that the repeated SL transmissions are performed, the receiving terminal may improve reception performance by receiving the repeated SL transmissions.

If one SL transmission (e.g., the first SL transmission, SL transmission in the first slot) among the repeated SL transmissions is successfully received, the receiving terminal may or may not perform a reception operation for the remaining SL transmission(s). Whether or not the receiving terminal performs the reception operation for the remaining SL transmission(s) may be determined by implementation. The transmitting terminal may transmit an SCI (e.g., first-stage SCI and/or second-stage SCI) including information indicating whether to perform repeated SL transmissions.

Alternatively, the transmitting terminal may perform repeated SL transmissions to maintain the COT. In this case, the SL transmission in the first slot among the repeated SL transmissions may be transmission of actual data, and the SL transmission(s) in the remaining slot(s) except the first slot among the repeated SL transmissions may be transmission(s) of a dummy signal. The transmitting terminal may transmit an SCI including information indicating whether to perform repeated SL transmissions and/or information indicating whether to transmit a dummy signal. The above-described information may be explicitly signaled by a 1-bit indication included in the SCI. Alternatively, the above-described information may be signaled implicitly by a specific value of a specific field included in the SCI. The receiving terminal may perform a reception operation for the actual data in the first slot among the consecutive slots, and may omit the reception operation in the remaining slot(s) among the consecutive slots.

When consecutive slots are configured, at least one slot of the consecutive slots may include guard symbol(s) for TX-RX switching and guard symbol(s) for RX-TX switching. In a slot where a PSFCH is not configured, the last symbol may be a guard symbol. In a slot where a PSFCH is configured, a symbol before the PSFCH (or AGC symbol) and a symbol after the PSFCH may be a guard symbol. Even when the SL transmission is performed in consecutive slots within the COT, the COT may be lost due to interruption of the SL transmission in the remaining guard symbol(s) except the last guard symbol of the last slot. When the SL transmission is performed in consecutive slots within the COT, it may be preferable to solve a problem of discontinuous periods due to the guard symbol in the slot(s) through the CPE.

The CPE may be applied to the SL transmission in a symbol following the guard symbol, and accordingly, the SL transmission may also be performed in the guard symbol. Alternatively, a cyclic postfix extension (COE) may be applied to the SL transmission in a previous symbol of the guard symbol, and accordingly, the SL transmission may also be performed in the guard symbol. Whether to apply the CPE and/or COE to the SL transmission may be indicated by an SCI. Alternatively, the terminal may implementally apply the CPE and/or COE to the SL transmission.

As another method, the terminal may perform repeated SL transmissions in a guard symbol and the next symbol of the guard symbol. Alternatively, the terminal may perform repeated SL transmissions in a guard symbol and a symbol preceding the guard symbol. Whether to perform repeated SL transmissions may be indicated by an SCI. Alternatively, the terminal may implementally determine whether to perform repeated SL transmissions.

To solve the problem of discontinuous periods caused by a guard symbol in consecutive slots, the guard symbol may be transitioned to a data symbol. The data symbol may be a symbol in which data (e.g., PSSCH) can be transmitted and received. For example, the terminal may consider a guard symbol as a data symbol and may perform SL transmission in symbols including the considered data symbol. The number of data symbols included in a slot to which the above-described method is applied may be greater than the number of data symbols included in the existing slot. Therefore, the terminal may transmit and receive data through PSSCH rate-matching. The transmitting terminal may transmit an SCI (e.g., first-stage SCI and/or second-stage SCI) including information indicating whether a guard symbol is considered as a data symbol and/or information indicating whether to perform PSSCH rate-matching, and may transmit data based on the information included in the SCI. The receiving terminal may receive the SCI from the transmitting terminal and receive the data based on the information included in the SCI. In this case, the receiving terminal may perform PSSCH rate-matching based on the information included in the SCI in a data reception procedure.

When SL transmission is performed in consecutive slots, the remaining AGC symbol(s) except the first AGC symbol(s) may be transitioned to data symbol(s), and the SL transmission may be performed in the transitioned data symbol(s). The existing AGC symbol may be used for repeatedly transmitting SL transmission of a symbol following the existing AGC symbol. In this case, the existing AGC symbol may not be helpful for improving transmission efficiency. If the AGC symbol is transitioned to a data symbol in which new data can be transmitted, transmission efficiency and performance may be improved. SCI signaling may be necessary for smooth data transmission and reception considering the above-described operation. For example, information indicating whether guard symbol(s) and/or AGC symbol(s) are transitioned to data symbol(s) may be included in the SCI.

When SL transmission is performed in consecutive slots, transition of guard symbol(s) and/or AGC symbol(s) to data symbol(s) may be necessary. Information indicating that a guard symbol is transitioned to a data symbol and/or information indicating that an AGC symbol is transitioned to a data symbol may be included in the SCI. Alternatively, the information indicating that guard symbol(s) and AGC symbol(s) are transitioned to data symbol(s) may be included in the SCI. The information indicating transition to data symbol(s) may be a 2-bit indicator, and the 2-bit indicator may be configured as shown in Table 6 below.

**[Table 6]**

| | **Description** |
|---|---|
| 00 | indicates that guard symbol(s) and AGC symbol(s) are not transitioned to data symbol(s) |
| 01 | indicates that AGC symbol(s) are transitioned to data symbol(s) |
| 10 | indicates that guard symbol(s) are transitioned to data symbol(s) |
| 11 | indicates that guard symbol(s) and AGC symbol(s) are transitioned to data symbol(s) |

The guard symbol(s) transitioned to data symbol(s) may be the remaining guard symbol(s) excluding the last guard symbol of the last slot among the plurality of slots. The AGC symbol(s) transitioned to data symbol(s) may be the remaining AGC symbol(s) excluding the first AGC symbol of the first slot among the plurality of slots. The terminals may identify data symbol(s) based on the indicator in Table 6 and perform SL communication in the data symbol(s). Alternatively, information indicating transition to data symbol(s) may be a 1-bit indicator. In this case, the 1-bit indicator set to a first value (e.g., 0) may indicate that guard symbol(s) and AGC symbol(s) are not transitioned to data symbol(s), and the 1-bit indicator set to a second value (e.g., 0) may indicate that guard symbol(s) and AGC symbol(s) are transitioned to data symbol(s).

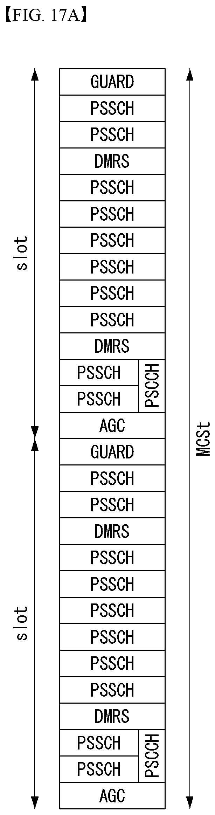

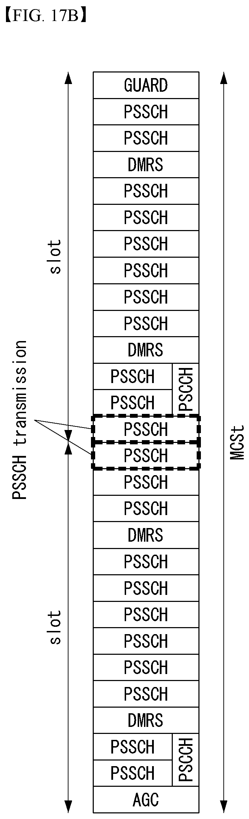

FIG. 17A is a conceptual diagram illustrating a first exemplary embodiment of SL transmission, and FIG. 17B is a conceptual diagram illustrating a second exemplary embodiment of SL transmission.

Referring to FIGS. 17A and 17B, SL transmission may be performed in consecutive slots. A slot shown in FIG. 17A may be the existing slot, and in a slot shown in FIG. 17B, a guard symbol and an AGC symbol may be transitioned to data symbols, and SL transmission (e.g., PSSCH transmission) may be performed in the transitioned data symbols. The SL transmission in the transitioned data symbols may be a repeated transmission for an SL transmission in a previous symbol of the transitioned data symbol or a repeated transmission for an SL transmission in a subsequent symbol of the transitioned data symbol. Rate-matching may be applied for the SL transmission in data symbols including the transitioned data symbols.

The guard symbol(s) and/or AGC symbol(s) may not be transitioned to data symbol(s), and the SL transmission may be performed in the guard symbol(s) and/or AGC symbol(s) by applying a CPE or COE to the SL transmission. When one TB is transmitted in consecutive slots, it may be preferable to transition the guard symbol(s) and/or AGC symbol(s) to data symbol(s) for a transmission operation of the one TB. When different TBs are transmitted in consecutive slots, it may be preferable to apply a CPE or COE to a transmission operation of the different TBs.

In addition to guard symbol(s) and/or AGC symbol(s), PSCCH symbol(s) may be transitioned to data symbol(s). The PSCCH symbol(s) may be symbol(s) for PSCCH transmission. When all control information for SL transmission in consecutive slots is transmitted in the first PSCCH, the remaining PSCCH(s) may not be used for control information transmission. In this case, symbol(s) for transmission of the remaining PSCCH(s) may be transitioned to data symbol(s). Information indicating whether PSCCH symbol(s) are transitioned to data symbol(s) may be included in an SCI.

When SL transmission is performed in consecutive slots, consideration of PSFCH symbol(s) in addition to guard symbol(s) and/or AGC symbol(s) may be required. The PSFCH symbol(s) may be symbol(s) for PSFCH transmission. When the terminal performs PSFCH transmission in PSFCH symbols configured in consecutive slots, the COT may be maintained. In the above-described situation, if another terminal requires PSFCH transmission in PSFCH symbol(s), the another terminal may perform an LBT operation for the PSFCH transmission. If the LBT operation fails, the another terminal may not be able to perform the PSFCH transmission.

Even when PSFCH transmission is not required in PSFCH symbols in consecutive slots, the terminal may transmit an arbitrary signal in the PSFCH symbols to maintain the COT. When one terminal continuously performs SL transmission in the COT, other terminal(s) may not perform SL transmission in the COT (e.g., a period in which the one terminal performs the SL transmission). Accordingly, there may not be other terminal(s) that require PSFCH transmission in the PSFCH symbol within the COT. If there are other terminal(s) that require PSFCH transmission in the PSFCH symbol within the COT, the other terminal(s) may not be able to perform PSFCH transmission due to a failure of an LBT operation. In this case, PSFCH resources may be wasted.

To solve the above-described problem, a terminal that maintains the COT by performing SL transmission in consecutive slots may stop the SL transmission in a PSFCH symbol (e.g., PSFCH symbol of a PSFCH slot) in the consecutive slots. Even when a maximum occupancy time of the COT is not reached, the terminal may stop the SL transmission in a PSFCH symbol within the COT. In this case, the COT may be terminated. Alternatively, when a common CPE start position for PSFCH transmission is configured, the terminal may perform SL transmission (e.g., data transmission) until a guard symbol before the PSFCH symbol, stop the SL transmission from the guard symbol, and perform PSFCH transmission based on the common CPE start position in the guard symbol and the PSFCH symbol. According to the above-described operation, the COT may be maintained.

A period from the time at which the SL transmission is stopped to the common CPE start position may be configured to be sufficiently short so that a condition for maintaining the COT is satisfied. The terminal performing SL transmission in consecutive slots may transmit an arbitrary signal at the common CPE start position to maintain the COT even when PSFCH transmission is not required in the PSFCH symbol. In this case, in order to prevent a collision between the arbitrary signal and PSFCH transmission(s) of other terminal(s), SL transmission may be performed in an arbitrary resource that is not configured as a PSFCH resource (e.g., PSFCH symbol).

For example, since PSFCH transmission is configured to be performed in some frequency regions within a resource pool, when the terminal knows the remaining frequency region(s) excluding the some frequency regions or knows frequency regions in which PSFCH transmission is not actually performed among PSFCH resources, the terminal may transmit an arbitrary signal in the corresponding frequency region(s). Additional transmission may be performed along with the PSFCH transmission to satisfy OCB requirements for PSFCH transmission. The additional transmission may be performed in common redundant RB(s) (e.g., interlace RB(s)). The arbitrary signal may be the same signal or a similar signal as a PSFCH. Alternatively, the arbitrary signal may be configured as a specific signal. The terminal may implementally select the arbitrary signal.

Alternatively, PSFCH resources may not be configured in a resource pool for which MCSt is configured. Even when PSFCH resources are configured in a resource pool for which MCSt is configured, an HARQ ACK/NACK feedback function may be disabled in a period for MCSt. Whether to support an MCSt operation may be configured on a resource pool or SL BWP basis. Even when the MCSt operation is configured to be supported, the MCSt operation may be allowed when y or more RBs in the resource pool are configured as resources for SL transmission to improve resource efficiency, and a priority of the SL transmission is higher than a specific priority. y and/or the specific priority may be indicated or configured to the terminal by signaling (e.g., SI signaling, UE-specific RRC signaling, PC5-RRC signaling, MAC CE signaling, PHY signaling (e.g., DCI and/or SCI)). Alternatively, y and/or the specific priority may be predefined in the technical specifications. y may be a natural number.

When multiple TBs are transmitted based on the MCSt operation, each of the multiple TBs may have a different CAPC. In this case, in a type 1 channel access procedure for the MCSt operation, a CAPC may be set to the largest CAPC or the smallest CAPC among CAPCs corresponding to the multiple TBs. The largest CAPC value may mean the lowest CAPC level, and the smallest CAPC value may mean the highest CAPC level.

When one TB is transmitted based on the MCSt operation, an HARQ ACK/NACK feedback for the one TB may not be transmitted while the MCSt operation is performed. Therefore, it may be difficult to satisfy a round trip time (RTT) of the HARQ ACK/NACK feedback. In this case, in the MCSt operation, an HARQ ACK/NACK feedback only for the last PSCCH and/or PSSCH transmission may be enabled, and the HARQ ACK/NACK feedback for the last PSCCH and/or PSSCH transmission may be performed.

### Multi-channel access procedure

A multi-channel transmission operation in an unlicensed band may be advantageous for large-capacity data transmission. When a plurality of RB sets exist in an unlicensed band, a communication node may perform an LBT operation on a channel corresponding to each of the plurality of RB sets, and transmit and receive data according to a result of the LBT operation. In NR-U communication, a multi-channel access procedure for DL communication and a multi-channel access procedure for UL communication may be different. The channel access procedure for DL communication may be classified into a type A multi-channel access procedure and a type B multi-channel access procedure.

When the type A multi-channel access procedure is used in DL communication, a communication node may perform a type 1 channel access procedure in each of a plurality of channels, and transmit data in channel(s) in which the type 1 channel access procedure succeeds. When the type B multi-channel access procedure is used in DL communication, a communication node may perform a type 1 channel access procedure in one of the plurality of channels and perform a type 2 channel access procedure in the remaining channel(s), and transmit data in channel(s) for which the type 1 channel access procedure and/or the type 2 channel access procedure succeed. In the type 2 channel access procedure, the communication node may perform a sensing operation in a preconfigured period (e.g., a minimum of 25 µs).

In UL communication, a communication node may perform a type 1 channel access procedure (e.g., LBT operation) in all of a plurality of channels, and transmit data when the type 1 channel access procedure succeeds in all of the plurality of channels. If the type 1 channel access procedure fails in at least one channel among the plurality of channels, the communication node may not transmit data.

The multi-channel access procedure for UL communication of NR-U may be applied to SL communication. When the multi-channel access procedure for DL communication of NR-U is applied to SL communication, a receiving terminal may not know in which channel a transmitting terminal successfully performs an LBT operation among a plurality of channels. Therefore, when one TB is transmitted in a plurality of channels, the receiving terminal may perform a reception operation by considering various cases according to whether LBT operations succeed in the channels. According to the above-described operation, the reception complexity of the receiving terminal may increase. Since PSFCH transmission and/or S-SSB transmission is performed independently for each channel, a receiving terminal may not need to consider various cases according to whether the LBT operations succeed in different channels. Therefore, for PSFCH transmission and/or S-SSB transmission, it may be preferable to apply the type A multi-channel access procedure and/or type B multi-channel access procedure for DL communication in NR-U communication.

### Resource selection procedure

Since an LBT operation is performed before transmission in an unlicensed band, it may preferable to exclude not only reserved resources of other terminals but also resources for performing the LBT operation for transmission in the reserved resources in a resource selection procedure. The type 2 channel access procedure may be sufficiently performed within a guard symbol of a previous slot of the reserved resources. For the type 1 channel access procedure, the entire period of the previous slot of the reserved resources may be required. When a resource used for SL transmission is selected (e.g., reserved) in the resource selection procedure, it may be preferable to identify whether a type 1 channel access procedure can be performed until the SL transmission is performed using the selected resource (e.g., reserved resource). The type 1 channel access procedure may be required to occupy a channel for the terminal before performing the SL transmission using the selected resource.

If a previous resource of the selected resource in the time domain is occupied by another terminal's transmission, the type 1 channel access procedure for channel occupancy may fail. If the type 1 channel access procedure fails, the communication node may not be able to use the selected resource. Therefore, in the resource selection procedure for the SL transmission, it may be identified whether not only a specific resource but also previous resource(s) of the specific resource have been reserved or occupied by another terminal. If the previous resource(s) of the specific resource are reserved or occupied by another terminal, the specific resource may be excluded from the resource selection procedure. The amount of resource(s) considered as the previous resource(s) of the specific resource may be preset by system information and/or RRC signaling (e.g., UE-specific RRC signaling).

In order not to interfere with a channel access procedure for SL transmission of another terminal, previous resource(s) of a resource reserved by the another terminal in the time domain may be excluded from the resource selection procedure. The amount of resource(s) (e.g., number of slots) considered as the previous resource(s) of the resource reserved by the another terminal may be configured in advance by system information and/or RRC signaling (e.g., UE-specific RRC signaling). Based on a result of comparison between a priority of the terminal and a priority of the another terminal, in the resource selection procedure, the terminal may determine whether to exclude the resource reserved by the another terminal. If the priority of the another terminal is higher than that of the terminal, the terminal may exclude the resource reserved by the another terminal in the resource selection procedure. If the priority of the terminal is higher than that of the another terminal, the terminal may not exclude the resource reserved by the another terminal in the resource selection procedure. The priority may be a priority or CAPC of data.

Alternatively, whether a COT is shared may be considered in the resource selection procedure. If a COT is shared by another terminal, a shared terminal may perform a type 2 channel access procedure instead of a type 1 channel access procedure before SL transmission. If a COT can be shared by another terminal, a terminal (e.g., shared terminal) may preferentially select the next resource(s) of the another terminal's reserved resource. If a CAPC of the SL transmission of the terminal is smaller than or equal to a CAPC of the SL transmission of the another terminal or if a priority of the SL transmission of the terminal is higher than a priority of the SL transmission of the another terminal, the COT initiated by the another terminal may be shared to the terminal.

A terminal may share a COT with another terminal. After performing SL transmission, the terminal may share the COT with another terminal, and the another terminal may perform SL transmission after performing a type 2 channel access procedure in the shared COT. A terminal that can share a COT with another terminal may preferentially select previous resource(s) of the another terminal's reserved resource in the time domain. Condition(s) of CAPC(s) and/or priority(ies) for the COT sharing may be applied in the same or similar manner as the above-described exemplary embodiment.

Each of the different methods described above may be supported depending on capabilities of the terminal. Enabling or disabling of each of the different methods described above may be configured in advance by system information and/or RRC signaling (e.g., UE-specific RRC signaling).

Since a CW size may vary and a random backoff operation is applied in a type 1 channel access procedure, it may not be preferable to exclude previous resource(s) and/or next resource(s) of a reserved resource of another terminal in a resource selection procedure. It may be preferable to exclude contiguous resources considering various parameters for the type 1 channel access procedure.

### Short control signaling transmission (SCSt)

According to conditions for a transmission periodicity and/or transmission time of an unlicensed band, transmission of a control signal in a short transmission period may be performed without performing an LBT operation. The above-described conditions may include a condition in which the number of transmissions is less than 50 times in a period of 50ms and/or a condition in which the total transmission time is less than 2500us. Considering the above-described operation, a PSFCH and/or S-SSB may be considered as a short control signal, and a PSFCH and/or S-SSB may be transmitted without performing an LBT operation. S-SSB transmission may satisfy the above-described condition. If a PSFCH transmission periodicity is short, PSFCH transmission may not satisfy the above-described condition.

PSFCH transmission and S-SSB transmission may each satisfy the above-described condition, but if PSFCH transmission and S-SSB transmission are considered together, the above-described condition may not be satisfied. Therefore, the communication node may preferentially transmit an S-SSB without performing an LBT operation according to the above-described condition, and then PSFCH transmission may be performed within a possible range.

### Mode 1 operation

If SL-U communication supports the mode 1 operation, a terminal may transmit information on whether an LBT operation succeeds to a base station to assist resource allocation of the base station. The terminal may perform an LBT operation for SL transmission in a resource allocated by the base station, and may not be able to perform SL transmission if the LBT operation fails. In this case, the terminal may transmit NACK to the base station. The base station may receive the NACK from the terminal. The base station may not be able to distinguish whether the NACK of the terminal is a NACK due to a failure of the LBT operation or a NACK due to a failure of data transmission. Therefore, in addition to ACK and NACK, a new state to indicate a failure of the LBT operation may be defined. The new state may indicate a failure of data transmission due to a failure of the LBT operation. The new state may be expressed by setting a separate cyclic shift value in addition to a cyclic shift pair representing ACK/NACK information.

When reporting the failure of the LBT operation, it may be required to distinguish a resource unit (e.g., RB set, resource pool, BWP) in which the failed LBT operation has been performed. The unit (e.g., resource unit) of failure reporting of the LBT operation may be set by signaling (e.g., SI signaling, UE-specific RRC signaling, PC5-RRC signaling). Alternatively, the unit of failure reporting of the LBT operation may be predefined in technical specifications. Alternatively, a separate cyclic shift pair may be applied for each resource unit of failure reporting of the LBT operation. The failure of the LBT operation may be reported through bit indication(s) rather than in form of a sequence.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a first terminal, comprising:
transmitting data to a plurality of terminals based on a groupcast scheme;
receiving one or more hybrid automatic repeat request (HARQ)-acknowledgement (ACK) feedbacks for the data from one or more of the plurality of terminals;
adjusting a contention window (CW) size based on a result of comparison between a threshold and an ACK ratio for the one or more HARQ-ACK feedbacks; and
performing sidelink (SL) communication based on a CW with the adjusted CW size.

2. The method according to claim 1, wherein when the ACK ratio is equal to or greater than the threshold, the CW size is reduced, and when the ACK ratio is less the threshold, the CW size is increased.

3. The method according to claim 2, wherein when the ACK ratio is equal to or greater than the threshold, the CW size is adjusted to a minimum CW size.

4. The method according to claim 1, further comprising: receiving a higher layer message including information on the threshold from the base station.

5. The method according to claim 1, wherein the threshold is set in a user equipment (UE)-specific manner or a cell-specific manner.

6. The method according to claim 1, wherein the threshold is independently set for each resource pool.

7. The method according to claim 1, wherein a minimum CW size and a maximum CW size for the CW size are each independently set according to a channel access priority class (CAPC).

8. The method according to claim 1, wherein when at least one HARQ-ACK feedback is not received from at least one terminal among the plurality of terminals, the at least one HARQ-ACK feedback for the at least one terminal is regarded as a negative ACK (NACK).

9. A method of a first terminal, comprising:
performing first sidelink (SL) communication using a first contention window (CW) having a first CW size; and
when a hybrid automatic repeat request (HARQ)-acknowledgement (ACK) feedback function is disabled, performing second SL communication using the first CW having the first CW size that is a latest size.

10. The method according to claim 9, further comprising:
when the first CW size is used x times, adjusting the first CW size to a second CW size larger than the first CW size; and
performing third SL communication using a second CW having the second CW size,
wherein x is a natural number.

11. The method according to claim 10, further comprising: receiving a higher layer message including information on x from the base station.

12. The method according to claim 10, wherein x is set in a user equipment (UE)-specific manner or a cell-specific manner.

13. The method according to claim 9, further comprising:
when the first CW size is a maximum CW size and the maximum CW size is used x times, adjusting the first CW size to a minimum CW size; and
performing fourth SL communication using a minimum CW having the minimum CW size,
wherein x is a natural number.

14. The method according to claim 9, wherein a minimum CW size and a maximum CW size for the first CW size are each independently set according to a channel access priority class (CAPC).

15. A first terminal comprising a least one processor,
wherein the at least one processor causes the first terminal to perform:
transmitting data to a plurality of terminals based on a groupcast scheme;
receiving one or more hybrid automatic repeat request (HARQ)-acknowledgement (ACK) feedbacks for the data from one or more of the plurality of terminals;
adjusting a contention window (CW) size based on a result of comparison between a threshold and an ACK ratio for the one or more HARQ-ACK feedbacks; and
performing sidelink (SL) communication based on a CW with the adjusted CW size.

16. The first terminal according to claim 15, wherein when the ACK ratio is equal to or greater than the threshold, the CW size is reduced, and when the ACK ratio is less the threshold, the CW size is increased.

17. The first terminal according to claim 15, wherein the at least one processor further causes the first terminal to perform: receiving a higher layer message including information on the threshold from the base station.

18. The first terminal according to claim 15, wherein the threshold is set in a user equipment (UE)-specific manner or a cell-specific manner.

19. The first terminal according to claim 15, wherein a minimum CW size and a maximum CW size for the CW size are each independently set according to a channel access priority class (CAPC).

20. The first terminal according to claim 15, wherein when at least one HARQ-ACK feedback is not received from at least one terminal among the plurality of terminals, the at least one HARQ-ACK feedback for the at least one terminal is regarded as a negative ACK (NACK).
